Europäisches Patentamt

European Patent Office

Office européen des brevets

(19)

(11) EP 0 366 086 B1

(12) # EUROPEAN PATENT SPECIFICATION

(45) Date of publication and mention
of the grant of the patent:
**11.08.1999 Bulletin 1999/32**

(51) Int Cl.⁶: **H04B 1/66**, H04B 1/69,
H04L 23/02

(21) Application number: **89119749.3**

(22) Date of filing: **24.10.1989**

(54) **Code shift keying (csk) apparatus and method for spread spectrum communication**

Einrichtung und Verfahren zur Spreizspektrumkommunikation mittels Kodesprungmodulation

Dispositif et procédé de communication à spectre étalé utilisant une modulation par commutation de code

(84) Designated Contracting States:
**DE FR GB NL**

(30) Priority: 24.10.1988 JP 26606488
20.03.1989 JP 6635189
20.03.1989 JP 6635289
20.03.1989 JP 6635389
20.03.1989 JP 6635489
20.03.1989 JP 6635589
20.03.1989 JP 6635689
20.03.1989 JP 6635789
20.03.1989 JP 6635889
20.03.1989 JP 6635989
20.03.1989 JP 6636089
20.03.1989 JP 6636189

(43) Date of publication of application:
**02.05.1990 Bulletin 1990/18**

(60) Divisional application: **99100493.8 / 0 910 174**

(73) Proprietor: **NEC HOME ELECTRONICS, LTD.**
**Osaka-Shi Osaka (JP)**

(72) Inventors:
- **Endo, Kaoru Nec Home Electronics Ltd.**
  **Osaka-shi Osaka (JP)**
- **Takahashi, Naomichi Nec Home Electronics Ltd.**
  **Osaka-shi Osaka (JP)**
- **Tsumura, Soichi Nec Home Electronics Ltd.**
  **Osaka-shi Osaka (JP)**

(74) Representative:
**DIEHL GLAESER HILTL & PARTNER**
**Patentanwälte**
**Augustenstrasse 46**
**80333 München (DE)**

(56) References cited:
- **PROCEEDINGS OF MELECON '87 March 1987, NEW YORK, US pages 157 - 161; SUST ET AL: 'All Digital Signal Processing in a Spread Spectrum Communication System'**
- **GLOBAL TELECOMMUNICATIONS CONFERENCE 1987 vol. 1, November 1987, NEW YORK, US pages 630 - 634; KOHNO ET AL: 'Adaptive Cancellation of Interference in Direct-Sequence Spread-Spectrum Multiple Access Systems'**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

### Background of the Invention

The present invention relates generally to a Code Shift Keying (CSK) Apparatus and method for Spread Spectrum Communication. The invention is in the field of spread spectrum (SS) communication by CSK modulation and refers to a corresponding method and an apparatus for practicing the method. More particularly, the invention relates to a communication method according to a code shift keying (CSK) modulation system, and to a communication apparatus for practicing that method.

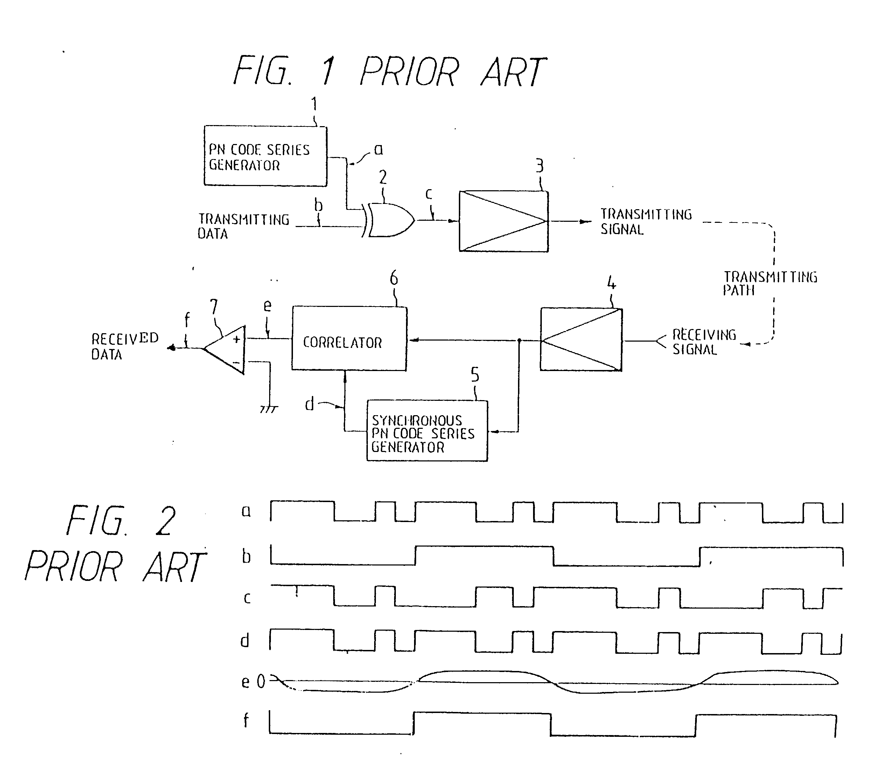

Recently, SS communication systems have been extensively employed in the fields of satellite communication, mobile communication, and power line communication. The conventional SS communication system will be described hereinafter with reference to Figs. 1 and 2. On the signal transmitting side, the output $a$ of a PN (pseudo noise) code series generator 1 and transmitting data $b$ are applied to an EX-OR circuit 2. The output $c$ of the EX-OR circuit 2 is applied to an amplifier 3. The output of Ex-OR circuit 2 is supplied as a transmitting signal to a signal transmitting path. On the signal receiving side, an input signal is applied to an amplifier 4. The amplified signal from the output of amplifier 4 is applied to a synchronous PN code series generator 5, and also to a correlator 6 where it is correlated with the output $d$ of the synchronous PN code series generator 5. The output of correlator 6 represents a correlation value (or signal e) which is compared with a predetermined threshold value by comparator 7. The output of comparator 7 is provided as receiving data $f$.

The signal transmission path may be wireless or wired; it may be formed of any signal transmitting medium suitable for such use. Transmitting signals are supplied directly to such a signal transmitting medium; often, they are then converted into signals which can be effectively transmitted through the signal transmitting medium, for transmission. In power line communication, it is necessary to provide interfaces for isolating transmitted signals from commercial electric power. As described above, the system portions acting on the signal transmitting medium, through which the transmitting signals are either converted into suitable corresponding signals for transmission or isolated from electric power, will be respectively referred to as "signal receiving interfaces" or "signal transmitting interfaces", depending on the application. Such interfaces provide a means for connecting to the signal transmitting medium.

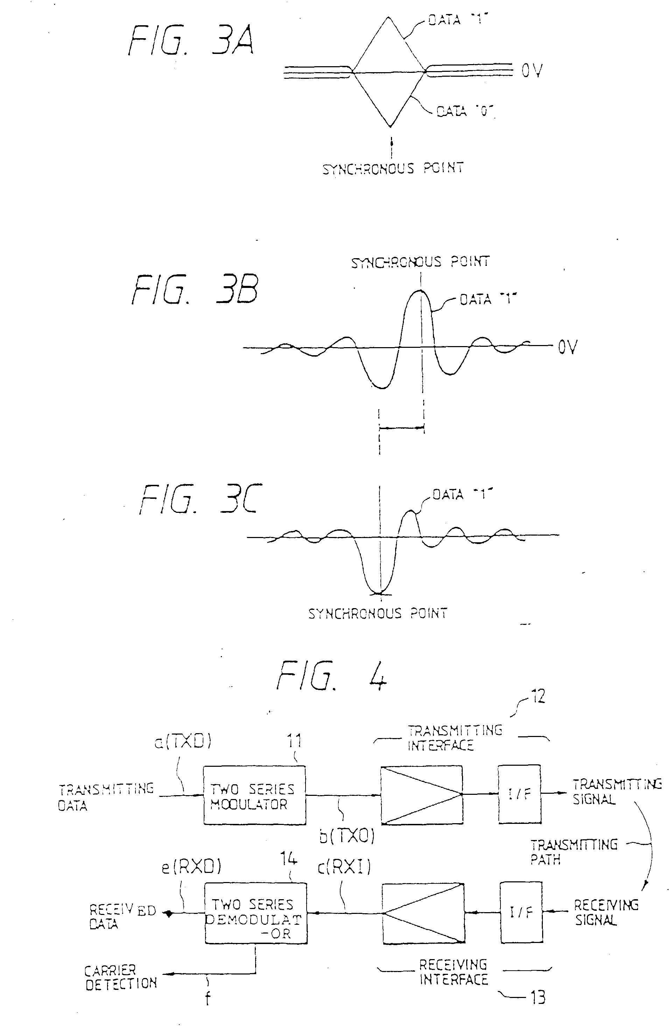

In the conventional communication system, the PN series generated by the synchronous PN code series generator 5 on the signal receiving side must be made synchronous with the PN series provided on the signal transmitting side. For this purpose, it is essential to search for a synchronous point. If the signal transmitting path is satisfactory in signal transmission characteristic, then the correlation waveform would show a peak at the synchronous point as shown in Fig. 3A. On the other hand, in a signal transmitting path which is considerably low in signal transmission characteristic, as in the case of power line communication, and which has a dip point in the signal transmission band as shown in Figs. 3B and 3C, the correlation waveform is deteriorated. In that event, the correlation value is inverted in sign (+ and -); that is, the data are inverted in level ("1" and "0"). In addition, a disadvantage is caused by the same condition in that the synchronization cannot be maintained. Sust and Kowatsch, in "Proceedings of melecon '87", page 157ff., describe a spread spectrum communication system which uses a digital matched filter technique to correlate the pseudo noise codes and a preamble code. The digitized input data stream is correlated in three matched filters, two for the pseudo noise codes and one for the preamble code, with the content of reference registers. Each matched filter outputs the sum of the correlated signals. Pseudo noise codes and preamble codes are indicated by peaks of this sum. The detection of a preamble indicates the arrival of data pseudo noise codes following the preamble. The system then displays an adaptive sampling window technique in that the arrival of such a preamble serves to start a timer which determines a known interval corresponding to the length of a pseudo noise code and a sampling window therein within which the correlation peaks are expected to fall. The correlation peaks appearing in each sampling window are compared to determine the value of the sent bit.

Kohno et al., in the "Conference Record Volume 1 of the Global Telecommunications Conference 1987", page 16.8.lff, describe a spread spectrum multiple access system. They suggest the use of Manchester M coded pseudo noise sequences in order to simplify the hardware necessary by omitting modulation/demodulation steps.

### SUMMARY OF THE INVENTION

It is an object of this invention to provide a Spread Spectrum (SS) communication method according to a novel Cosde Shift Keying ("CSK") system, which is not subject to the above-described difficulties accompanying a conventional SS communication system, and to provide an SS communication apparatus for practicing that method. This object is solved by the CSK methods of independent claims 12 and 18 and by the CSK apparatus of independent claims 1 and 6. The preamble of claims 1 and 6 is based on prior art document Sust and Kowatsch, mentioned above. Further advantageous features of the method and apparatus are evident from the dependent claims.

The invention provides a CSK signal transmitting method and a CSK signal receiving method which are employed for SS communication, and provides a CSK signal transmitting apparatus and a CSK signal receiving apparatus wich are employed for SS communication.

A signal demodulating apparatus is provided within the CSK signal receiving apparatus, capable of demodulating in a stabke manner the received CSK signal and of suppressing an error even if a signal transmission characteristic of the transmission path is low.

A correlator is provided within the CSK signal receiving apparatus, capable of correlating the received CSK signal with a Manchester M Series at high speed and in real time.

A peak position detecting apparatus is provided within the CSK signal receiving apparatus, capable of detecting a peak position of the received CSK signal accurately.

A peak position determining apparatus is provided within the CSK signal receiving apparatus, capable of determining a pek position without being influenced by variations in the signal transmission characteristic.

A carrier detecting apparatus is provided within the CSK signal receiving apparatus, capable of accurately detecting a carrier contained in the received CSK signal even if the signal transmission characteristic is low.

A synchronisation establishment determining apparatus is provided within the CSK signal receiving apparatus, by which a starting point of the communication can be stably and accurately determined without being influenced by noise.

A synchronisation non-establishment determining apparatus is provided within the CSK signal receiving apparatus, capable of determining accurately a synchronisation non-establishment at any time.

In the CSK communication system, one of two Manchester M series which are produced with a predetermined period and equal in code length is transmitted as a transmitting signal; the selection depends on whether the transmitting data is "1" or "0". The Manchester M series to actually be transmitted has a maximum value of the absolute value of its auto correlation which is always larger than that of the cross-correlation of the two Manchester M series, even if the value of the auto correlation or cross-correlation changes due to the noise signal, distortion of the signal or the like. The received signal is correlated to the two different Manchester M series, to provide two correlation outputs; the receiving data "1" or "0" is formed according to the comparison in peak value between the two correlation outputs.

On the transmitting side of that CSK communication system, in each predetermined period, one of the two Manchester M series is transmitted as a transmitting signal; the selection depends on whether the transmitting data is "1" or "0". The corresponding CSK signal transmitting apparatus includes:

first and second Manchester M series generators for producing two Manchester M series which are equal in code length; and a switch circuit for transmitting as a transmitting signal one of the output signals of the first and second Manchester M series generators (the selection depends on whether transmitting data is "1" or "0"). The Manchester M series to actually be transmitted has a maximum value of the absolute value of its autocorrelation which is always larger than that of the cross-correlation of the two Manchester M series.

On the receiving side, a receiving signal is compared with two Manchester M series which are the same as those used on the signal transmitting side, to provide two correlation outputs; the receiving data of "1" or "0" is formed according to the comparison in peak value between the correlation outputs. The corresponding CSK signal receiving apparatus includes: a pair of correlators for comparing a received signal with two Manchester M series which are the same as those used on the signal transmitting side, to provide correlation outputs; and a demodulator circuit for forming the received data of "1" or "0" according to the comparison in peak value between the correlation outputs of the correlators.

The term "M series" as used herein is intended to mean the largest in period of the variety of code series which are produced with a shift register having a plurality of stages and a linear arithmetic circuit. With a shift register having n stages, the length of an M series produced is $2^n - 1$.

The term "Manchester code" as used herein designates a code in which one cycle of a square wave having a certain phase is provided for an input binary signal "1", and in which one cycle of a square wave which is opposite in phase to the above is provided for an input binary signal "0".

The term CSK (Code Shift Keying) as used herein designates a signal modulation system in which two binary PN (pseudo noise) code series (including M series and Manchester M series) which are equal in code length respectively correspond to binary values "0" and "1" of the transmitting data, and in which one of the two PN code series is actually transmitted in accordance with the transmitting data, wherein the PN code series to actually be transmitted has a maximum value of the absolute value of its autocorrelation which is always larger than that of the cross-correlation of the two PN code series.

Fig. 1 is a circuit diagram, partially as a block diagram, showing the arrangement of a conventional SS communication system;

Fig. 2 is a time chart for a description of the operation of the conventional SS communication system shown in Fig. 1;

Figs. 3A-3C are graphs explaining drawbacks accompanying a conventional SS communication system;

Fig. 4 is a block diagram showing a first CSK communication system according to the present invention;

Fig. 5 is a block diagram showing a second CSK communication system of the invention;

Fig. 6 is a circuit diagram, partially as a block diagram, illustrating one example of a modulator shown in Fig. 5;

Fig. 7 is a time chart for a description of the operation of the modulator shown in Fig. 6;

Fig. 8 is a circuit diagram, partially as a block diagram, illustrating another example of the modulator shown in Fig. 6;

Fig. 9 is a circuit diagram, partially as a block diagram, showing a further example of the modulator;

Fig. 10 is a time chart for a description of the operation of the modulator;

Fig. 11 is a block diagram showing a two series modulator in a signal transmitting side shown in Fig. 4;

Fig. 12 shows a relation between a transmission data and a two series in a signal transmitting side and waveforms of demodulated signals of a two series demodulator in a signal receiving side;

Fig. 13 is a circuit diagram, partially as a block diagram, showing one example of the demodulator shown in Fig. 4, employing a SAW (Surface Acoustic Wave) convolver;

Fig. 14 is a timing chart showing demodulation waveforms in case of a short transmission data;

Fig. 15 is a circuit diagram, partially as a block diagram, showing one example of a correlator shown in Fig. 11;

Fig. 16 is a circuit diagram, partially as a block diagram, showing another example of a correlator shown in Fig. 11;

Fig. 17 is a circuit diagram, partially as a block diagram, showing a further example of a correlator shown in Fig. 11;

Fig. 18 is a circuit diagram, partially as a block diagram, showing a still further example of a correlator shown in Fig. 11;

Fig. 19 is a table explaining an operation for an up/down counter shown in Fig. 18;

Fig. 20 is a circuit diagram, partially as a block diagram, showing a whole structure of the correlator shown in Fig. 11;

Fig. 21 is a circuit diagram, partially as a block diagram, showing a still further example of a correlator shown in Fig. 11;

Fig. 22 is a circuit diagram, partially as a block diagram, showing a pair of correlators shown in Fig. 5;

Fig. 23 is a circuit diagram, partially as a block diagram, showing one modification of the correlators shown in Fig. 5;

Fig. 24 is a circuit diagram, partially as block diagram, showing another example of the correlators;

Fig. 25 is a circuit diagram, partially as block diagram, shown in still another example of the correlators;

Fig. 26 is a circuit diagram showing an example of a register shown in Fig. 25;

Fig. 27 is an explanatory diagram showing relationships between a Manchester series and a Manchester M series;

Fig. 28 is a circuit diagram, partially as a block diagram, showing one example of a demodulator shown in Fig. 5;

Fig. 29 is a waveform diagram for a description of the operation of the demodulator shown in Fig. 28;

Fig. 30 is a circuit diagram, partially as a block diagram, showing one example of a synchronous control circuit shown in Fig. 5;

Fig. 31 is a waveform diagram for a description of a peak position detecting operation;

Fig. 32 is a waveform diagram for a description of a synchronization establishment determining operation;

Fig. 33 is a waveform diagram for a description of a synchronization non-establishment determining operation;

Fig. 34 is a block diagram showing an arrangement of a CSK modem;

Fig. 35 is a graphical representation indicating a correlation signal, a data interval, and observation intervals set in the data interval; and

Fig. 36 is a circuit diagram, partially as a block diagram, showing another example of the synchronous control circuit including a synchronous tracking circuit.

## DETAILED DESCRIPTION OF THE PREFERRED EMBODIMENTS

### I. CSK Modulation System

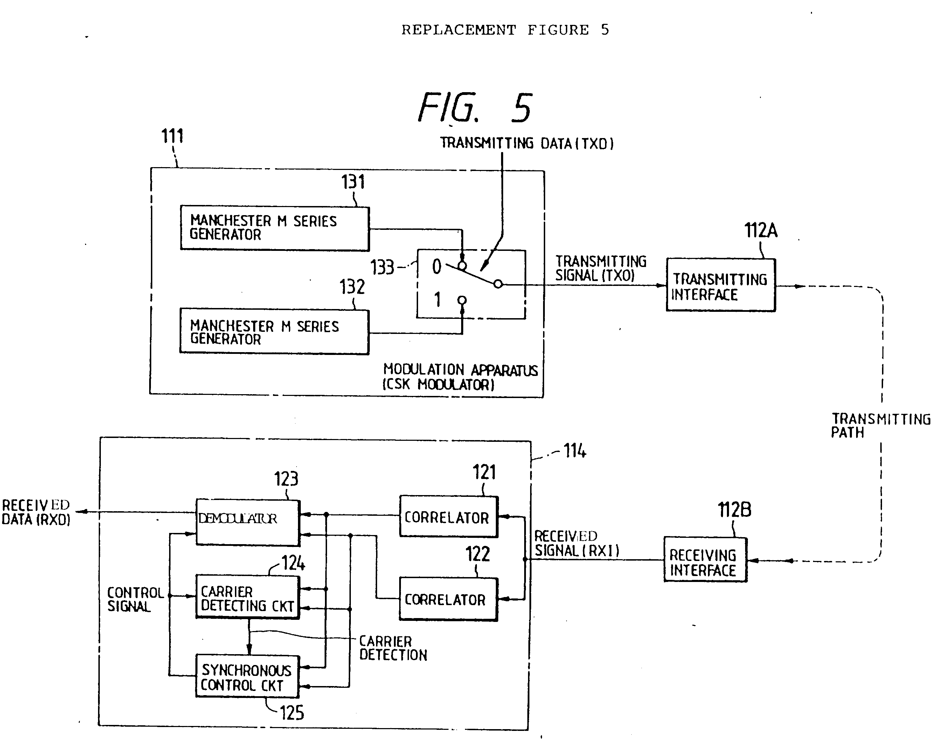

Figs. 4 and 5 illustrate two different system arrangements of a SS communication system using CSK modulation. Those two systems are based upon a single concept of the present invention in which a plurality of Manchester M series which are equal in code length are employed. The Manchester M series to actually be transmitted has a maximum value of the absolute value of its autocorrelation which is always larger than that of the cross-correlation of the two Manchester M series.

Fig. 4 shows the entire arrangement of a first communication system according to a CSK system employing Manchester code M series.

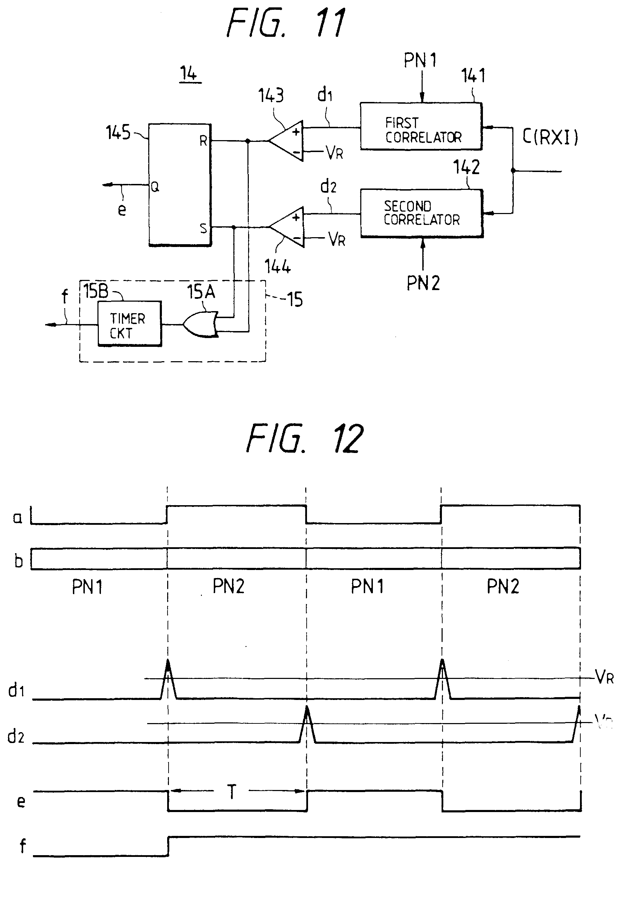

The signal transmitting side of that system has two series modulator 11 and a transmitting interface 12. A transmitting data $a$ (TXD) is inputted into the two series modulator 11 which outputs one of two PN (pseudo noise) code series as an output signal $b$ (TXO). The transmitting data $a$ consists of binary signal ("1" and "0"). The two series modulator 11 outputs one series for one level of digital data "1" or "0", and another series for the other level. For instance, as later described in detail in conjunction with Figure 12, the two series modulator 11 outputs a first series PN1 when the transmitting data _a_ is "0" and outputs a second series PN2 when the transmitting data _a_ is "1". The output of the two series modulator 11 is applied to a transmitting path through the transmitting interface 12.

As described in the BACKGROUND OF THE INVENTION, the transmitting interface 12 provides modulation of a carrier, or the composition with the power line in power line transmission. In general, it is a mechanism or means for connecting to the transmission medium. Similarly, the receiving interface 13 provides demodulation of the carrier, or the isolation of a signal from the power line in power line transmission. The receiving interface 13 outputs a received signal _c_ (RXI) which is applied to a two series demodulating apparatus 14 which outputs a received data _e_ (RXD) corresponding to the binary number "0" or "1" of the transmitting data _a_ (TXD). The two series demodulating apparatus 14 further outputs a carrier detection signal _f_ when a carrier signal is received.

Fig. 5 shows the entire arrangement of a second communication system according to a CSK system employing Manchester code M series. The signal transmitting side of that system has a DSK modulator 111 which comprises two Manchester M series generators 131 and 132 which synchronously produce two different Manchester code M series with a predetermined period. The two series are equal in code lenght, and the Manchester M series to actually be transmitted has a maximum value of the absolute value of its autocorrelation which is always larger than that of the cross-correlation of the two Manchester M series. The code outputs of the generators 131 and 132 are applied to a switch circuit 133 also comprised in the DSK modulator 111. The switch circuit 133 is independtly operated according to binary number transmitting data ("1" and "0"). For isntance, when the transmitting data is "0", the switch circuit 133 selects the code output of the generator 131; and when it is "1", the switch circuit 133 selects the code output transmitted generator 132. The code output thus selected is transmitted as a transmitting TXO. the operation of the swith circuit 133 is carried out in synchronisation with the period of the Manchester code M series produced, and each data of one binary number ("1" and "0") is represented by a Mancheste code series of one period. The transmitting signal TXO is applied through a transmitting interface 112A to a signal transmitting path or signal transmitting medium.

The switching selection to be made between the two different Manchester code M series i.e., the selection of which series is to be switched, is determined according to the code ("1" or "0") of the data to the transmitted. Therefore, the modulation system is referred to as "code shift keying (CSK) modulation system." One with ordinary skill in the art would readily recognize that with a CSK modulation system, the PN code series, not only the Manchester M series, can be used.

The signal receiving side of the system shown in Fig. 5 includes receiving interface 112B which provides demodulation of a carrier, isolation of a signal from the power line, and an A/D (analog-to-signal) conversion. the receiving interface 112B converts a signal received through the signal transmitting medium into a digital received signal RXI.

The signal receiving side further includes a signal receiving apparatus 114 which comprises two correlators 121 and 122, a demodulator 123, a carrier detecting circuit 124, and a synchronous control circuit 125. The digital received signal RXI outputted by the receiving interface 112B is applied to first and second correlators 121 and 122. The Manchester code M series produced by the Manchester M series generator 131 has been set in the first correlator 121, so that the Manchester code M series thus set is correlated to the received signal RXI. Similarly, the Manchester code M series produced by the Manchester M series generator 132 has been set in the second correlator 122, so that the Manchester code M series thus is correlated to the received signal RXI. The correlation outputs of each of the correlators 121 and 122 are applied to the demodulator 123, in which a demodulation signal "1" or "0" is selected according to the inputted correlation values; that demodulation signal is outputted as received data RXD. More specifically, when the correlation output of the first correlator 121 is larger in correlation peak value than that of the second correlator 122, the received data "0" is provided by demodulator 123; and when the correlation output of the second correlator 122 is larger in correlation peak value than that of the first correlator 121, the received data "1" is provided by demodulator 123.

The correlation outputs are further applied to the carrier detecting circuit 124 and the synchronous control circuit 125. The carrier detecting circuit 124 detects the oresence or absence of a carrier from the correlation output received, to provide a detection signal. The detection signal is applied to the synchronous control circuit 125. The presence or absence of the carrier is used to determine whether or not the received signal RXI is being received. When the carrier is detected, the synchronous control circuit 125 forms a timing signal for demodulation and carrier detection, which is applied to the demodulator 123 and the carrier detecting circuit 124.

As described above, in the CSK communication system, the two correlation outputs on the signal receiving side are subjected to comparison, and the received data "0" or "1" is determined based on the difference detected by that comparison. Accordingly, the Manchester M series on the signal receiving side is not always strictly synchronous with that on the signal transmitting side, and the data can be demodulated without error. Furthermore, if the outputs of the correlators are employed in the form of absolute values, then no error is caused even if the signal transmission path, by its adverse effect on a transmitting signal, makes the transmitting peak value negative. In addition, employment of the Manchester code M series can reduce the low frequency components of the received signal, which would significantly suppress the coupling loss associated with the signal transmitting path.

## II. Signal Transmitting Side

## CSK Modulator 111

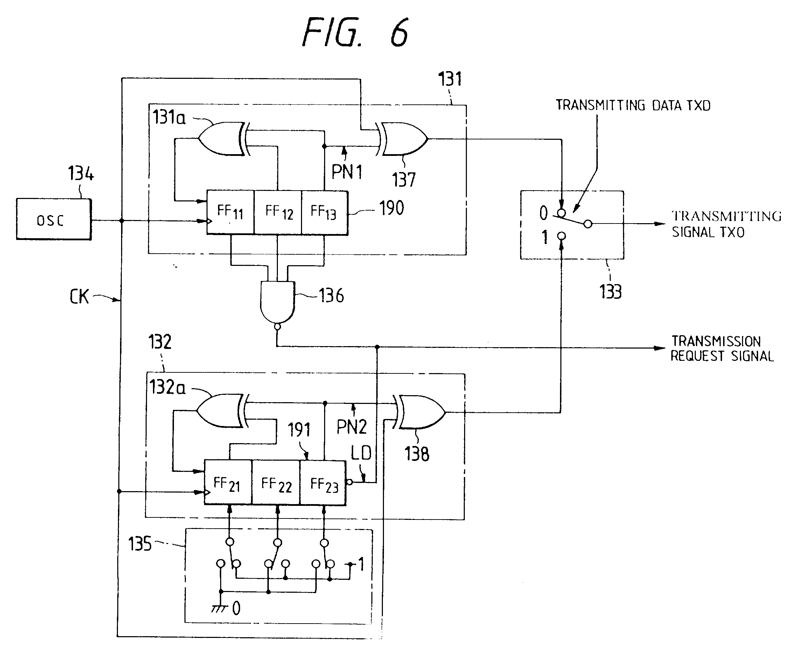

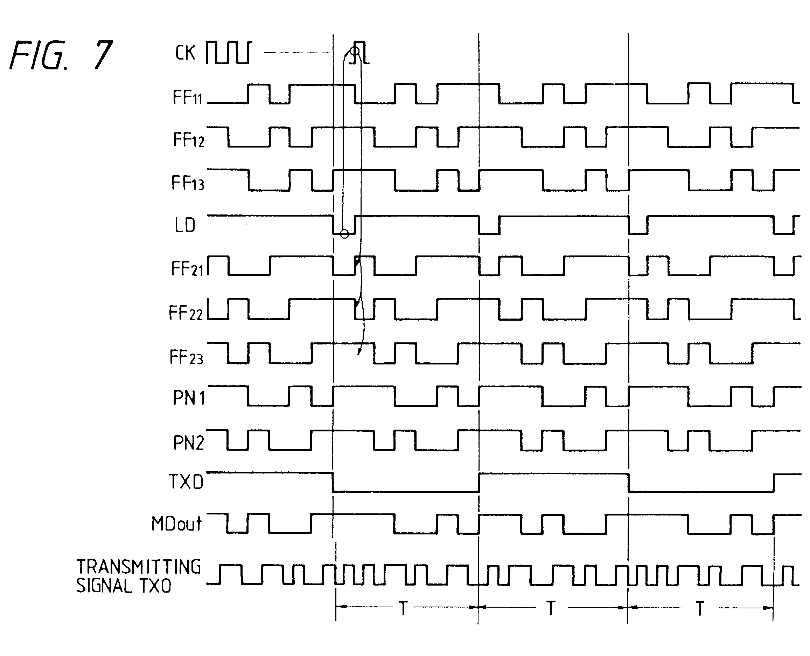

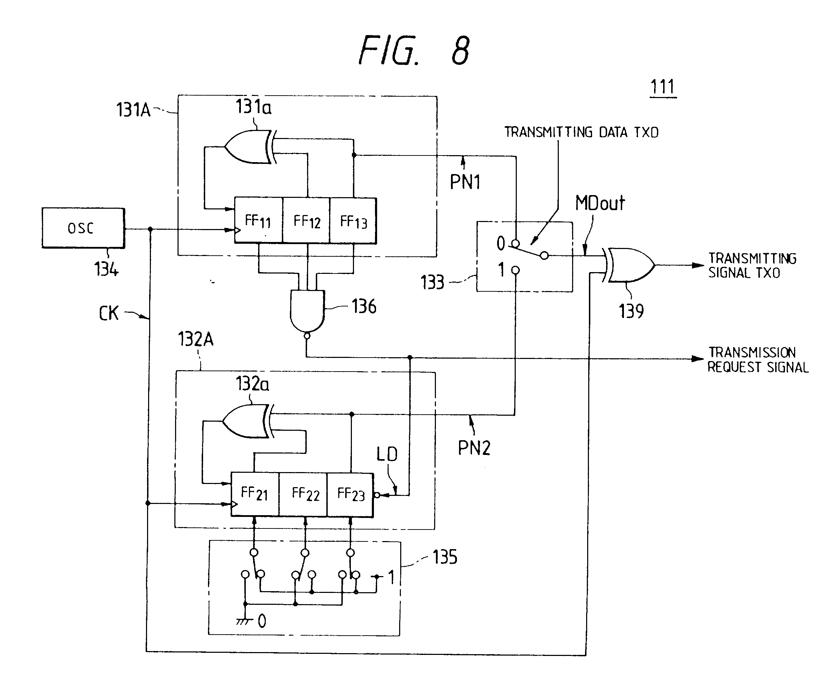

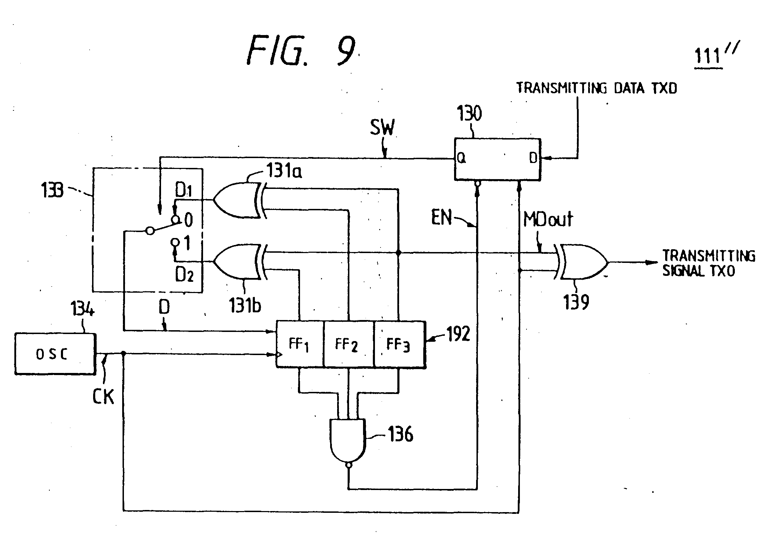

Fig. 6 shows one embodiment of the CSK modulator 111 embodiment shown in Fig. 6, Fig. 7 illustrates the waveforms of various signals at different points located therein.

Each Manchester M series generator 131, 132 includes a three stage (n=3) shift register 190, 191. Shift register 190 of generator 131 has stages $FF_{11}$, $FF_{12}$, and $FF_{13}$, and shift register 191 of generator 132 has stages $FF_{21}$, $FF_{22}$, and $FF_{23}$. These shift registers shift data with the timing of a clock signal CK produced by a clock signal generator 134. The feedback circuit of the first shift register 190 ($FF_{11}$ through $FF_{13}$) is different from that of the second shift register 191 ($FF_{21}$ through $FF_{23}$). In shift register 190, the codes of the second and third stages $FF_{12}$ and $FF_{13}$ are fed back to the input stage $FF_{11}$ through an EXCLUSIVE OR (EX-OR) circuit 131a; and in shift register 191, the codes of the first and third stages $FF_{21}$ and $FF_{23}$ are fed back to the input stage $FF_{21}$ through an EX-OR circuit 132a. The shift regsiters and their feedback circuits form the M series generators (PN code generators, PN standing for "Pseudo noise). The clock signal CK and the code output of the last stage $F_{F13}$ of shift register 190 are applied to an EX-OR circuit 137, while the clock signal CK and the code output of the last stage $FF_{23}$ of shift register 191 are applied to an EX-OR circuit 138, so that the Manchester codes are formed.

A phase synchronizing circuit is provided to effect the condition that when the Manchester M series generator 131 is in a predetermined phase (all "1"), the Manchester M series generator 132 is in a predetermined phase (initial phase). The phase synchronizing circuit comprises a NAND circuit 136 and an initial phase setting unit 135. The initial phase setting unit 135 is to set initial codes in the stages $FF_{21}$ through $FF_{23}$ of shift register 191. It can set any codes (except codes of all "0"). When all the stages $FF_{11}$ through $FF_{13}$ of the shift register 190 have "1" (which occurs once per period T of the Manchester code M series), the output signal of the NAND circuit 136 is set to "L", and at the following rise of the clock signal CK the codes set by the initial phase setting unit 135 are loaded in the stages $FF_{21}$ through $FF_{23}$ of shift register 191.

The outputs of the Manchester M series generators 131, and 132, i.e., the outputs of the EX-OR circuits 137 and 138, are applied to the switch circuit 133. With the aid of the transmitting data TXD, the switch circuit 133 is operated every period (data interval) T of the Manchester code M series. The output of the NAND circuit 136 is applied, as -a transmission request signal, to a transmitting data processing section (such as a microprocessor). Each time the transmission request signal is applied to the transmitting data processing section, the latter outputs one bit ("1" or "0") of the transmitting data TXD and applies it to the switch circuit 133.

Fig. 8 shows another embodiment of the CSK modulator 111'. In contrast with the CSK modulator shown in Fig. 6, the CSK modulator 111 of Fig. 8 does not include EX-OR circuits 137 and 138 within respective Manchester M series generators 131A and 132A therein (131 and 132 in Fig. 6). Instead, an EX-OR circuit 139 receiving the modulation output $MD_{out}$ of the switch circuit 133 and the clock signal CK is provided on the output side of the switch circuit 133, to provide the Manchester code. The outputs of the Manchester M series generators, represented by the codes of the last stages of the shift registers, are applied to the switch circuit 133. The arrangement shown in Fig. 8 is advantageous in that the number of EX-OR circuits is reduced to one.

The switch circuit 133 switches the outputs of the M series generators 131A and 131B in each time period, according to the binary number "0" or "1" of the transmitting data TXD. In the drawings, the output PN1 of the generator 131A is selected when the transmitting data TXD is "0", and the output PN2 of the generator 131B is selected when the data TXD is "1".

A one-clock latch circuit may be provided on the output side of the switch circuit 133 in Fig. 6 or on the output side of the EX-OR circuit 139 in Fig. 8, to shape the waveform of the transmitting signal TXO.

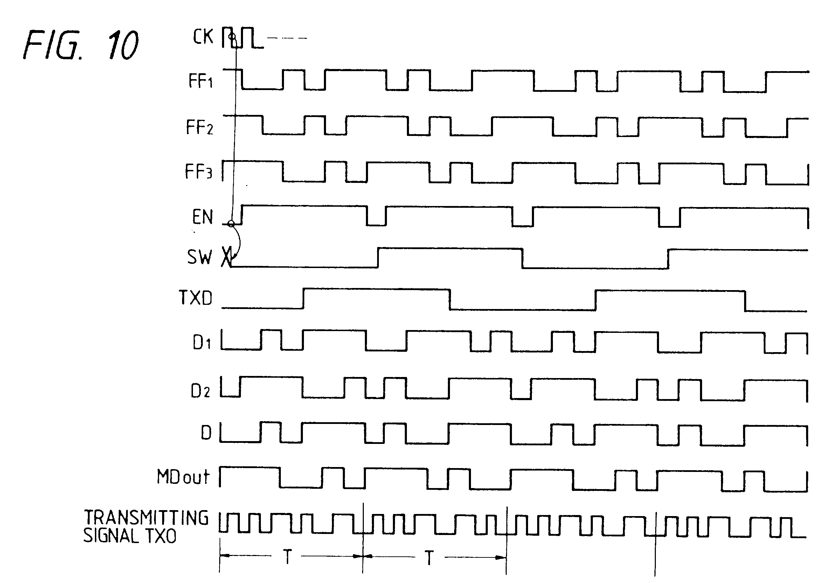

Fig. 9 shows yet a further embodiment of the CSK modulator 111", and Fig. 10 shows the waveforms of various signals at different points within that CSK modulator.

In the embodiment of Fig. 9, the Manchester M series generators are made up of a shift register having a plurality of stages, feedback circuits coupled to the shift register, and an EX-OR circuit receiving the output of the shift register, and the clock signal. More specifically, in the CSK modulator shown in Fig. 9, the first Manchester M series generator comprises a shift register 192 having stages $FF_1$, $FF_2$, and $FF_3$, an EX-OR circuit 131a which is a feedback circuit, and an EX-OR circuit 139 for forming a Manchester code; the second Manchester M series generator comprises the shift register 192 ($FF_1$, $FF_2$, and $FF_3$), an EX-OR circuit 131b which is a feedback circuit, and the EX-OR circuit 139 for forming a Manchester code. The shift register 192 ($FF_1$, $FF_2$ and $FF_3$, the shift register being of three stages n 3) is common to both Manchester M series generators, as is the EX-OR circuit 139 for forming a Manchester code. In other words, the shift register 192 ($FF_1$, $FF_2$, and $FF_3$) and the EX-OR circuit 131a form a first M series generator, while the same shift register 192 ($FF_1$, $FF_2$, and $FF_3$) and the EX-OR circuit 131b form a second M series generator; and the first M-series generator and the EX-OR circuit 139 form a first Manchester M series generator, while the second M series generator and the EX-OR circuit 139 form the second Manchester M series generator.

The feedback circuit, namely, the EX-OR circuit 131a operates to connect in feedback the codes of the second and third stages $FF_2$ and $FF_3$ of the shift register 192 to the input stage $FF_1$; and the EX-OR circuit 131b operates to connect in feedback the codes of the first and second stages $FF_1$ and $FF_2$ to the input $FF_1$. The feedback circuits of the two Manchester M series generators are different from each other. The switch circuit 133 is connected to the feedback circuits, such that outputs $D_1$ and $D_2$ of the EX-OR circuits 131a and 131b, respectively, are applied to the switch circuit 133. The output of switch circuit 144 is supplied to the input stage $FF_1$ of the shift register 192 ($FF_1$, $FF_2$, and $FF_3$).

The switch circuit 133 is operated, according to the transmitting signal TXD, by the Q output (SW) of a D flip-flop circuit 130 in each period (data interval) T of the Manchester code M series. The output clock signal CK of the clock signal generator 134 is applied to the shift register 192 to control the timing of shift operation therein, and it is applied to the D flip-flop circuit 130. When all stages $FF_1$, $FF_2$ and $FF_3$ of shift register 192 have "1" (which occurs once per period T), the output of the NAND circuit 136 is set to "L". The "L" output is applied, as an enable signal EN, to the D flip-flop circuit 130. Therefore, when the enable signal EN is at "L" level, the D flip-flop circuit 130 fetches the transmitting data TXD at the fall of the clock signal CK, and applies it as a switch control signal SW to the switch circuit 133. In response to the switching operation of the switch circuit 133, the feedback circuit of the Manchester M series generator (the first or second M series generator) is completed, and the output $MD_{out}$ of the M series generator whose feedback circuit is completed (or the output of the last stage of the shift register) is applied to the EX-OR circuit 139. The clock signal CK is applied to the EX-OR circuit 139; the output $MD_{out}$ of the M series generator is thus Manchester-coded and is to be outputted as the transmitting signal TXO.

If necessary, the output of the NAND circuit 136 may be applied, as a transmission request signal, to the transmitting data processing section (such as a microprocessor) to cause the latter to produce the following one bit of the transmitting data TXD. In addition, a one-clock latch circuit may be provided on the output side of the EX-OR circuit 39, to shape the waveform of the transmitting signal TXO.

III. Signal Receiving Side

Two Series Demodulating Apparatus 14

Fig. 11 is a block diagram showing the two series demodulating apparatus 14 of the embodiment of the invention shown in Fig. 4. Fig. 12 shows the waveforms of the points $\underline{a}$, $\underline{b}$, $\underline{e}$, $\underline{f}$, $d_1$ and $d_2$ in Figs. 4 and 11.

The modulated, received signal $\underline{c}$ (RXI) is applied both to a first correlator 141 where the signal $\underline{c}$ is correlated with the first series PN1 and to a second correlator 142 where the signal $\underline{c}$ is correlated with the second series PN2. Respective outputs $d_1$ and $d_2$ of the correlators 141 and 142 are each compared with a threshold values $V_R$ by separately corresponding comparators 143 and 144. The comparators 143 and 144 output a pulse "1" if the signal $\underline{c}$ is larger then the threshold values $V_R$. The outputs of the comparators 143 and 144 are respectively applied to the R and the S terminal of an RS flip-flop circuit 145. As shown in Fig. 11, the output of comparator 143 is applied to the R terminal and the output of comparator 144 is applied to the S terminal. Since the transmitting data "0" corresponds to the first series PN1, the input terminals of the RS flip-flop circuit 145 are arranged such that the RS flip-flop circuit 145 is reset when the received signal $\underline{c}$ is the first series PN1 (output of the circuit 145 being "0"), and such that the RS flip-flop circuit 145 is set when the received signal $\underline{c}$ is the second series PN2 (output of the circuit 145 being "1"). The waveforms of the correlation outputs $d_1$ and $d_2$ in the signal receiving side and the demodulated data $\underline{e}$ from the RS flip-flop circuit 145 are shown in Fig. 12. As is apparent from Fig. 12, the peaks of the correlation are at the end of each time period.

When no carrier signal is received, the carrier detection circuit 15 outputs a signal $\underline{f}$. The carrier detection circuit 15 is provided with an OR circuit 15A and a timer circuit 15B. Each output of the comparators 143 and 144 is applied to the timer circuit 15B through the OR circuit 15A. The timer circuit 15B is set by an output pulse of the OR circuit 15A and outputs a signal $\underline{f}$ of "1" during a predetermined time period and then outputs a signal $\underline{f}$ of "0" after the time period is expired. The predetermined time period is set longer than the time period T of the PN code (see Fig. 12). Accordingly, the signal $\underline{f}$ is always "1" if there is any one of the correlation outputs during the predetermined time period of the signal $\underline{f}$, and the signal $\underline{f}$ is "0" if there is no correlation output after the time period is expired, so that the no-carrier condition is detected.

According to the two series demodulating apparatus 14 of the first system of the invention, as described above, the receiving data "1" or "0" can be attained by simply detecting the synchronization and actuation of the RS flip-flop circuit. That is in contrast to the conventional system shown in Fig. 1 in which the received data of "0" or "1" is formed as the correlation waveform from the modulated receiving signal. Therefore, it is unnecessary that the phase synchronization of the PN code on the signal receiving side be strictly synchronous with that on the signal transmitting side. Furthermore, ho error will be caused in the data demodulation if the absolute value of the output of the correlator is employed.

Basically, the two series demodulator 14 as shown in Fig. 11 is provided with correlation part wherein the received signals are correlated with PN1 and PN2 outputted from the two internal PN code generators, a data demodulation part wherein the data is demodulated according to an output of the correlation part, and a carrier detection circuit.

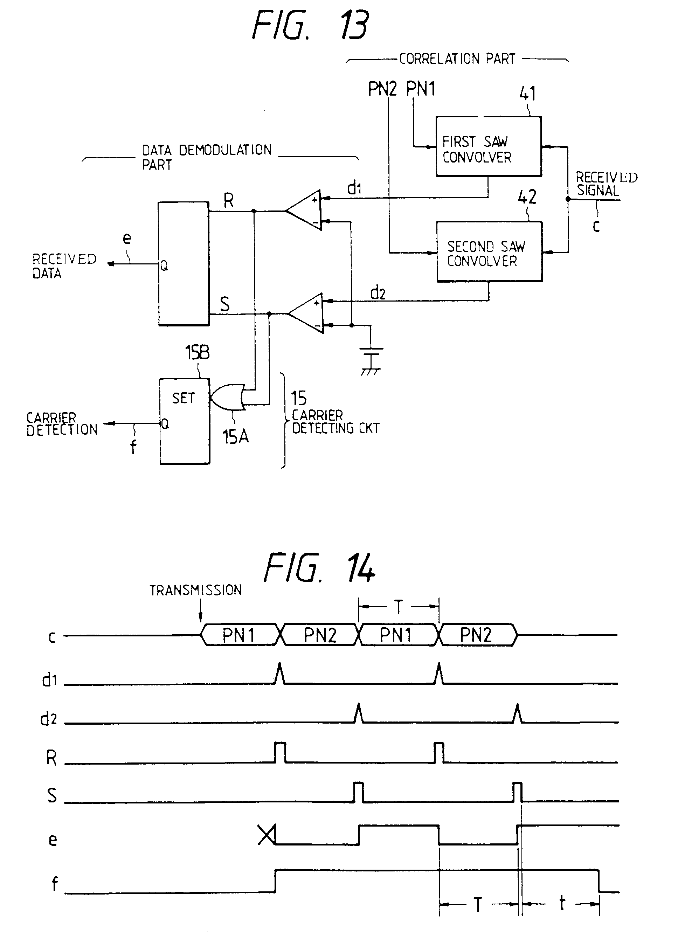

Fig. 13 is a circuit diagram showing another embodiment of the two series demodulator. In this embodiment, a surface acoustic wave (SAW) convolver is employed. The circuit arrangement shown in Fig. 13 is substantially the same as that illustrated in Fig. 11. That is, the first PN code series corresponding to the transmitting data of the binary number "0" is correlated with PN1 by a first SAW (Surface Acoustic Wave) convolver 41 while the second PN code series corresponding to the transmitting data of the binary numer "1" is correlated with PN2 by a second SAW convolver 42. Here, the received signal $c$ is an analog signal.

Fig. 14 shows waveforms of signals in the circuit shown in Fig. 13, in the context of four bits of transmitting data. The output $f$ of the carrier detecting circuit 15 returns to "0" after a time t + T (t>T; a time point of one bit data) after the timer circuit 15B is set and then the data transmission is completed.

The correlation part of the signal demodulating apparatus, in several embodiments, is now described. In one embodiment the correlator input data is an analog signal; in another embodiment the correlator input data is a digital signal derived by converting an analog signal into digital form.

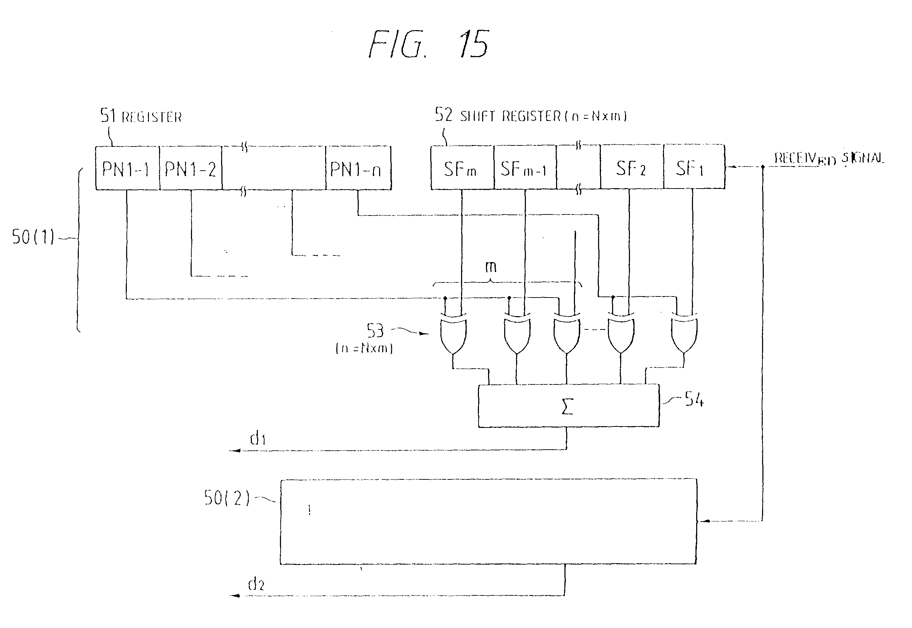

Fig. 15 illustrates the correlation part wherein the received signal is a digital signal. The received signal is applied to both correlators 50(1) and 50(2) which have the same structure. In Fig. 15, only correlator 50 (1) is illustrated in detail. The received signal is correlated with the first series PN1 by correlator 50(1) and with the second series PN2 by correlator 50(2),

A condition pattern of the first series PN1 is fixed by a register 51 and stored therein. Therefore, the number of stages of the first series PN1 is equal to the code length N. Such data pattern is designated as PN1-1, PN1-2, ... PN1-n. The receiving signal is applied to a shift register 52 in which the content of the received signal is changed step by step in stages thereof. The output of each stage of the shift register 52 is applied to one input of a respective one EX-OR circuit of an EX-OR circuit group 53 having n (= N m) EX-OR circuits. The fixed data pattern PN1-1 - PN1-n stored in register 51 is applied to the other input of corresponding respective ones of the EX-OR circuits in the EX-OR circuit group 53. All outputs of the EX-OR circuit group 53 are summed by a summing circuit 54 which outputs a correlation output $d_1$.

In order to improve the accuracy of the correlation operation, shift register 52 has n (= N m) stages for correlating each data of the number m with each bit of the fixed data pattern. Further, the shift clock is multiplied by m.

By providing a delay line having taps of the n (= N m) number instead of the shift register 52, a multiplier group instead of the EX-OR circuit group 53, and an analog adder instead of the summing circuit 54, the correlation part can be made applicable to an analog received signal.

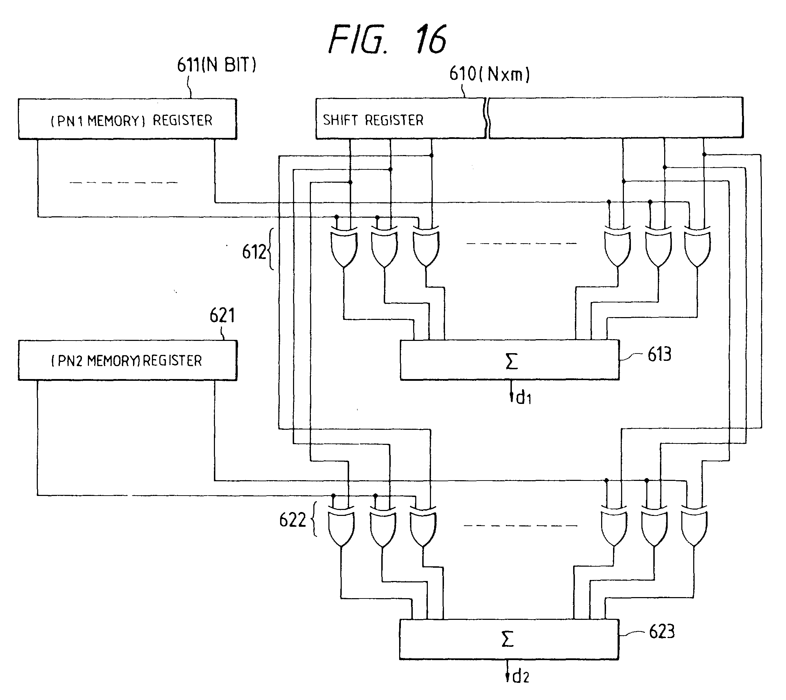

Fig. 16 illustrates a further embodiment of the correlation part wherein a single shift register is commonly employed so that the number of required circuits is reduced. Memory registers 611 and 621 respectively store a fixed pattern of the first series PN1 and the second series PN2. A shift register 610 having n (= N · m) stages for inputting the received signal is commonly employed both for correlation with the first and for the second series. The single shift register 610 is connected both to a first series circuit group containing an EX-OR circuit group 612 and a summing circuit 613 for outputting a first correlation output $d_1$, and to a second series circuit group containing an EX-OR circuit group 622 and a summing circuit 623 for outputting a second correlation output $d_2$.

The apparatus shown in Fig. 16 is for a received signal. However, it can be made applicable to an analog received signal by providing a delay line having a tap instead of the shift register 610, a multiplier group instead of the EX-OR circuit group 612 and 622, and an analog adder instead of the summing circuit 613 and 623.

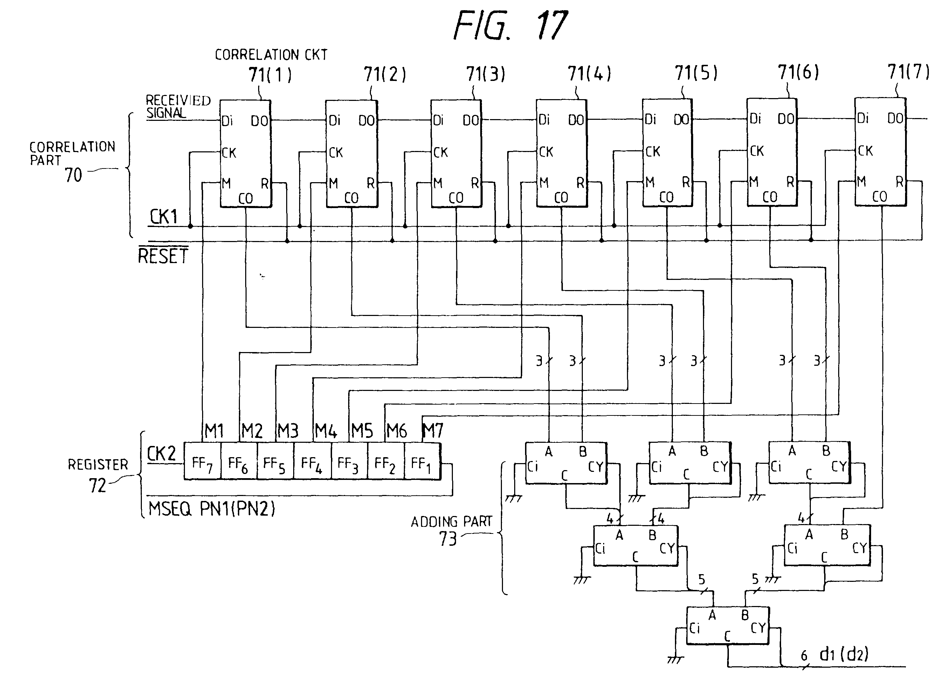

Fig. 17 is a circuit diagram showing still another embodiment of the portion of the signal receiving apparatus performing the correlation, by which the number of circuits shown in Fig. 15 are reduced. This circuit is disclosed in detail in Japanese Patent Application No. 160954/88 filed by the same applicant.

In Fig. 15, as described above, one bit of the fixed pattern is applied to each EX-OR circuit in an EX-OR circuit group 53 having n (= N · m) EX-OR circuits, and the outputs of all EX-OR circuits are summed by the summing circuit 54. There, if the received signal is a digital signal, the outputs of successive two adjacent EX-OR circuits are added by a corresponding first adding circuit; then, outputs of successive two adjacent first adding circuit are added by a corresponding second adding circuit. Accordingly, the number of the adders, in a plurality of adding circuits, becomes extremely large in total. According to the example shown in Fig. 17, on the other hand, a correlator part 70 consists of a plurality of correlation circuits 71(1) - 71(7). In the example of Fig. 17, the M series code has a code length of 7 bits. Each correlation circuit 71 correlates one bit of the fixed pattern with a data of the number m (corresponding to SF1-SFm in Fig. 15), for example, of the receiving data of N • m.

According to the example of Fig. 17, the correlation values with respect to data of the number m are added at one time by employing an up/down counter in view of a relation between input value and output value of the shift register having m stages. Specifically, first the register 72 inputs the first series PN1 having the code length of 7 bits and stores each bit value M1-M7 thereof. Next, the correlation part 70 inputs the received signal and the data contained therein is shifted by the correlation circuits 71(1)-71(7), and each block correlates them.

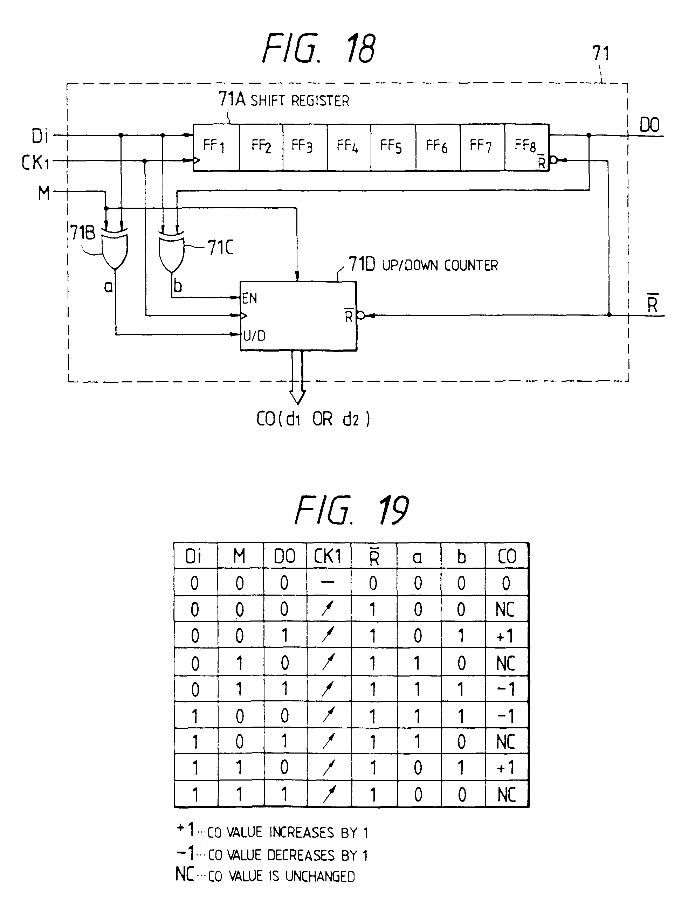

As shown in Fig. 18, each correlation circuit 71 includes a shift register 71A having 8 stages, a pair of EX-OR circuit 71B, 71C and an up/down counter 71D. The up/down counter 71D counts a correlation of an input signal Di with a bit value M of the PN1. Fig. 19 is a table showing a correlation count operation of the counter 71D. All correlated count values from the correlation circuit 71(1)-71(7) are added by an adding part 73 shown in Fig. 17, so that a correlation signal $d_1$ can be obtained.

With respect to PN2, a correlation signal $d_2$ can be obtained by the same circuit structure. According to the example described above, the number of the adders in total can be greatly reduced, thus providing a simple circuit. Further, such an apparatus is advantageous in that a phase delay is effectively decreased.

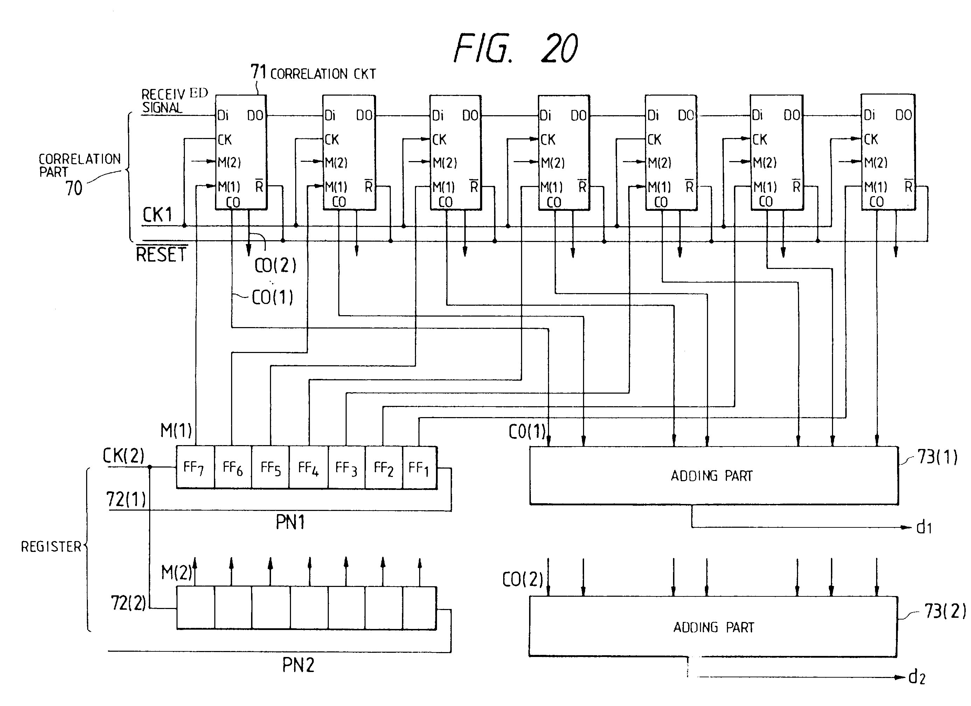

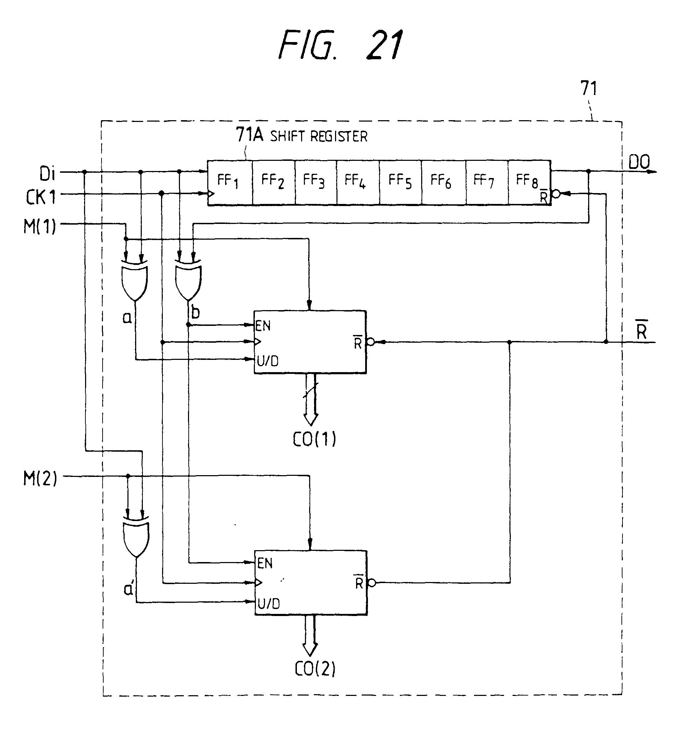

In Fig. 17, a pair of the correlation part 70 is separately disposed for PN1 and PN2. However, the shift register 71A can commonly be used for the PN1 and PN2. Fig. 20 is a circuit diagram showing a whole structure of the apparatus and Fig. 21 is a circuit diagram showing a specific structure of the correlation circuit 71.

Correlators 121 and 122

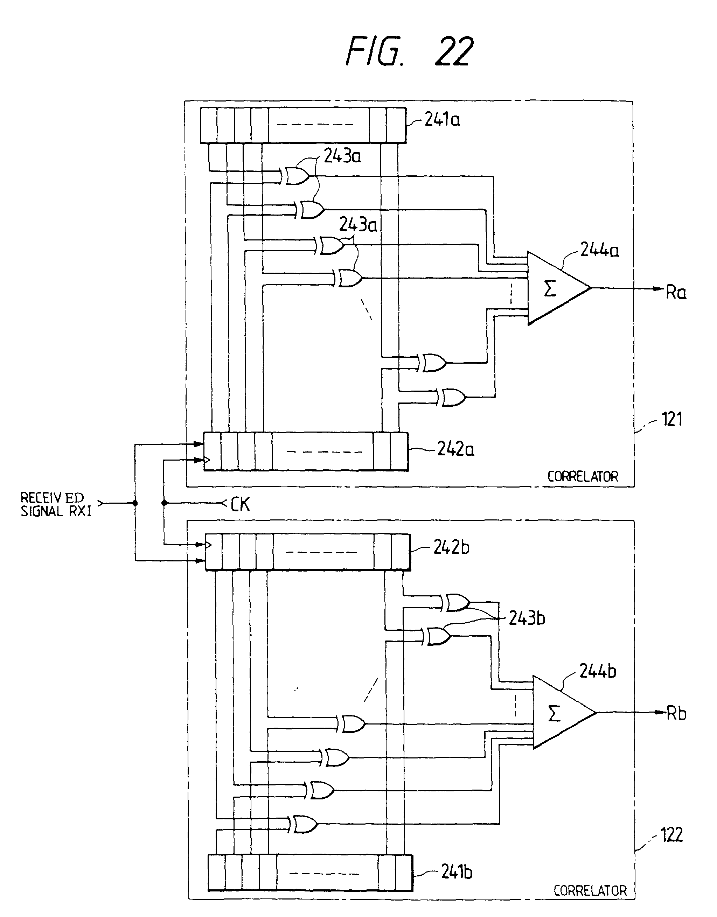

The two correlators 121 and 122 of the embodiment of the invention shown in Fig. 5 will now be described together with reference to Fig. 22. Correlators 121 and 122 have registers 241a and 241b each of which has N stages (register 241a in correlator 121 and register 241b in correlator 122). The Manchester code M series produced by the Manchester M series generators 131 and 132 in the modulator 111 have been set in the registers 241a and 241b in advance, respectively. The code length of the M series produced by a shift register of n stages is $2^n$-1. In the modulator 111, the M series being Manchester-coded; thus, the number of stages N of the registers 241a and 241b is as follows:

$$N = 2 (2^n - 1)$$

On the other hand, the digital received signal RXI inputted through the receiving interface 112B is applied to shift registers 242a and 242b which are provided in the correlators 121 and 122, respectively. These shift registers 242a and 242b have N stages, too, and are driven by the clock signal CK of which the frequency is twice as high as that of the clock signal in the modulator 111.

In the correlator 121, the codes set in the stages of the register 241a and the received signal codes applied to the corresponding stages of the shift register 242a are applied to EX-OR circuits 243a, respectively, where they are subjected to comparison. The outputs of all the EX-OR circuits 243a are applied to an adder 244a, where they are subjected to addition. The output signal of the adder 244a represents the degree of coincidence between the codes at the stages of the register 241a and the codes at the stages of the shift register 242a, and it is the correlation output Ra of the correlator 121. The received signal RXI is shifted in the shift register in response to each clock signal CK, and accordingly the correlation output Ra changes every clock signal CK.

Similarly as in the above-described correlator 121, in the other correlator 122, EX-OR circuits 243b determine whether or not the codes set in the stages of the register 241b coincide with the received signal codes applied to the respective stages of the shift register 242b. The outputs signals of all the EX-OR 243b are applied to an adder 244b, where they are summed up. The adder 244b outputs a correlation output Rb which represents the degree of coincidence between the Manchester M series set in the register 241b and the input digital received signal RXI.

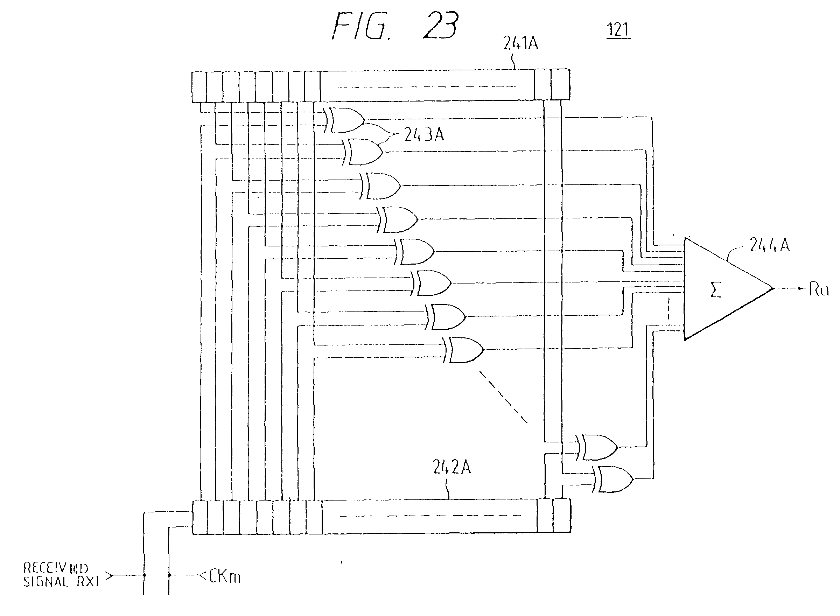

Fig. 23 shows one modification of the correlator 121. The modification employs a register 241A and a shift register 242A each having N m stages (where m is the positive integer larger than one (1)) instead of the register 241a and the shift register 242a. The shift register 242A is driven by a clock signal $Ck_m$ whose frequency is m times as high as that of the above-described clock signal CK. The correlator 121 includes N m EX-OR circuits 243A, which receive the codes set in the stages of the register 241A and those in the stage of the shift register 242A, respectively. The outputs of all the EX-OR circuits 243A are applied to an adder 244A, where they are summed up. As a result, the adder 244A provides a correlation output Ra. By multiplying the number of stages of the register and the shift register by a factor m, the accuracy of the correlation operation can be increased. The other correlator 122 can be modified in the same manner.

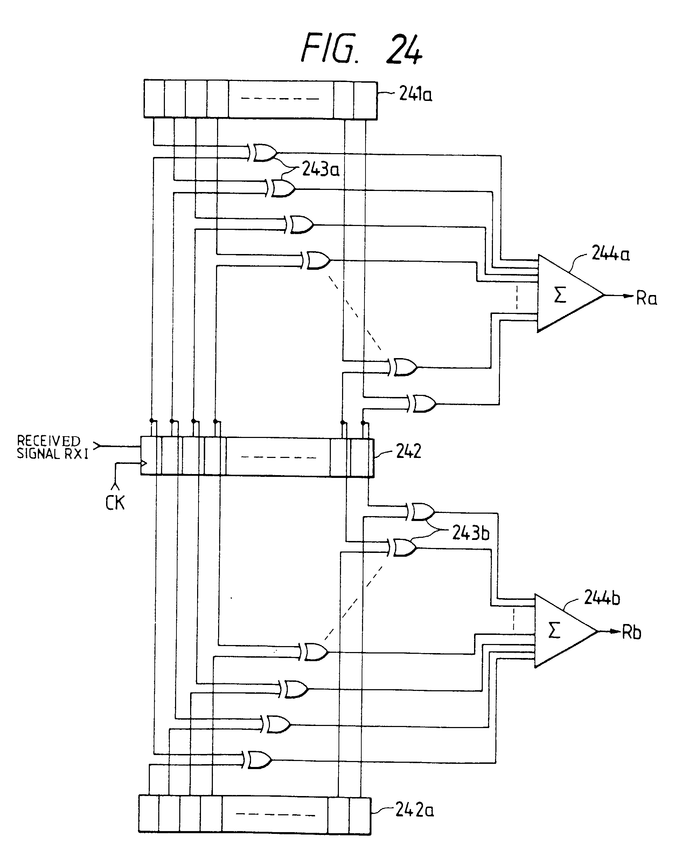

Fig. 24 shows another embodiment of the correlators 121 and 122. Here, the correlators 121 and 122 include one and the same shift register 242 to which the received signal RXI is applied. That is, the number of shift registers is reduced, whereby the arrangement is simplified. Also, the shift register having its number of stages multiplied by m as shown in Fig. 23 can be commonly included in both correlators 121 and 122.

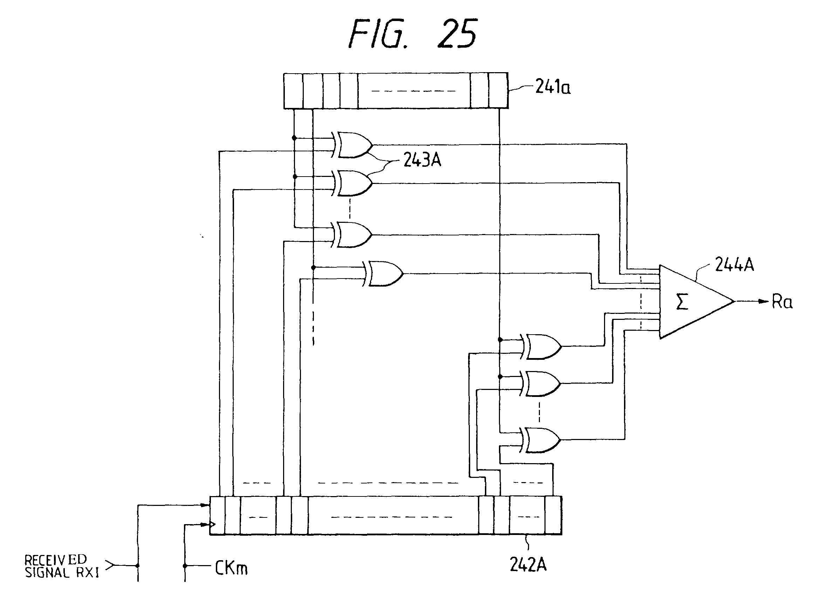

Fig. 25 shows another example of the correlators 121 and 122. A register 241a having N stages, and a shift register 242A having N m stage are shown. Here, a stage of the register 241a corresponds to m stages of the shift register 242A. Therefore, the codes set in the stages of the register 241a and the codes in the stages of the shift registers 242A are applied to m EX-OR circuits 243A for determination of the degrees of coincidence therebetween.

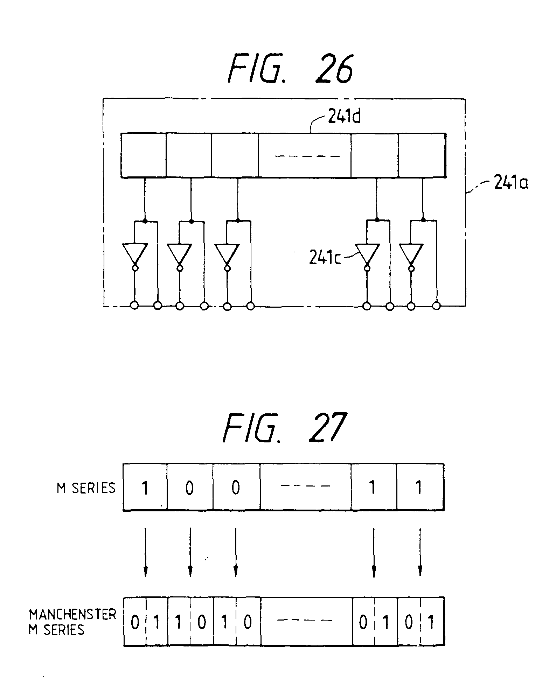

Fig. 26 shows an arrangement of the register 241a. As shown in Fig. 27, the codes of the Manchester M series are formed according to the codes of the original M series. This will be described in more detail. As shown in Fig. 26, the codes of the M series are set in a register 241d having N/2 stages, and they are outputted as they are, and outputted through NOT circuits 241c, respectively, to provide the codes of the Manchester M series.

Demodulator 123

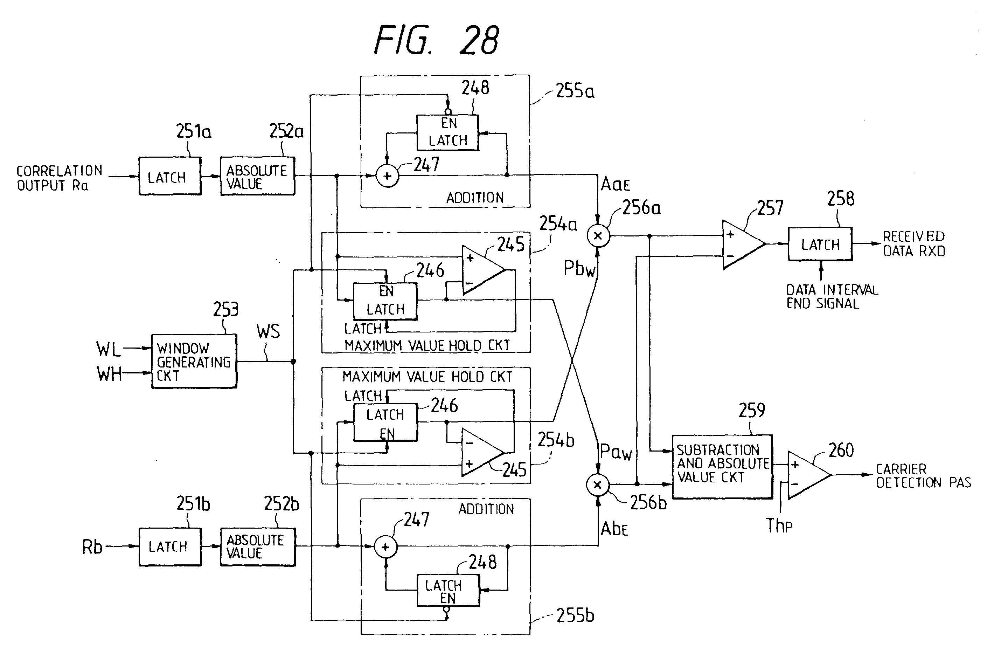

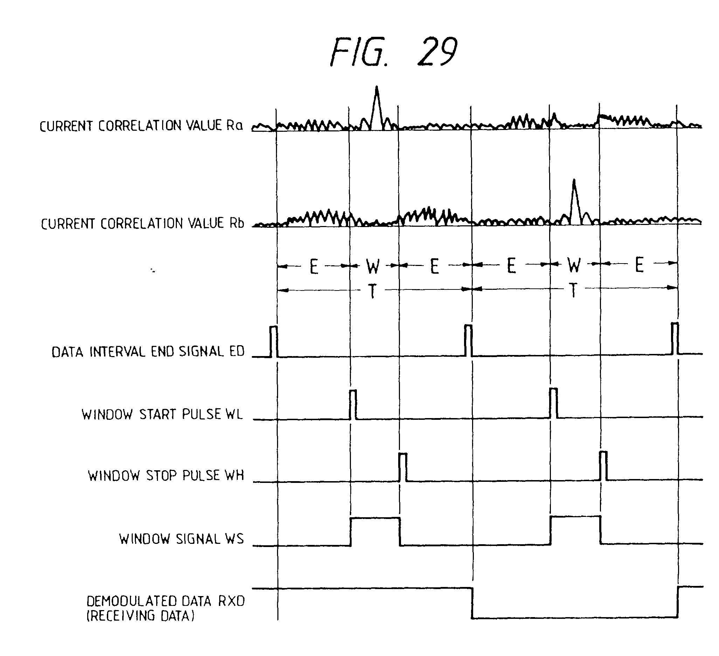

Fig. 28 shows one embodiment of the demodulator 123 and the carrier detecting circuit 124 of the embodiment of the invention shown in Fig. 5. Fig. 29 shows the waveforms of various signals at different points in the circuit shown in Fig. 28. For convenience in description, the correlation outputs Ra and Rb are shown as analog signal.

First, the principle of demodulating data according to the correlation outputs Ra and Rb of the pair of correlators 121 and 122 will be described. In Fig. 29, one data interval T (equal to one period of the Manchester M series) is divided into three parts; a central part, namely, a window part (hereinafter referred to merely as "a W part", when applicable) and two parts one each sides of the W part (hereinafter referred to as "E parts", when applicable). The two E parts are equal in length. It is not always necessary to make the two E parts equal in length to each other, nor to provide the W part at the middle of the data interval T. That is, the W part and the E parts may be represented as follows:

W part -- Interval between $(T - d)/2$ and $(T + d)/2$
E parts -- Interval between 0 and $(T - d)/2$, and Interval between $(T + d)/2$ and T

(where $0 < d < T$)

The W part is called "observation interval".

When data is transmitted, one of the correlation outputs Ra and Rb has a correlation peak during the data interval T. The correlation peak is detected by the synchronous control circuit 125, and a data interval end signal ED for defining the end of a data interval is formed so that the correlation peak comes to the middle of the data interval T. The synchronous control circuit 125 forms, according to the data interval end signal ED, a window start pulse WL for the start point of the W part, and a window stop pulse WH for defining the end point of the W part.

In the following description, the characters $P_{aw}$, $P_{bw}$, $A_{aE}$, and $A_{bE}$ are intended to mean as follows:

$P_{aw}$: the peak value (maximum value) of the W part of the correlation output Ra;
$P_{bw}$: the peak value (maximum value) of the W part of the correlation output Rb;
$A_{aE}$: the sum (addition value) of the E parts of the correlation output Rb; and
$A_{bE}$: the sum (addition value) of the E parts of the correlation output Rb.

The modulation data (received data RXD) is produced as follows:

When $P_{bw} \cdot A_{aE} > P_{aw} \cdot A_{bE}$, then the data is "1".
When $P_{bw} \cdot A_{aE} < P_{aw} \cdot A_{bE}$, then the data is "0".

Theoretically, with $P_{bw} > P_{aw}$, the data is "1"; and with $P_{bw} < P_{aw}$, the data is "0". However, in the case where noises are contained, comparison of the peak values in the correlation outputs may cause demodulation errors. In general, in a correlation output having a correlation peak, the levels of parts on both sides of the peak are smaller than the correlation level of a correlation output which has no correlation peak. For instance, in the case where the correlation output Rb has a correlation peak, the sum $A_{bE}$ is smaller than the sum $A_{aE}$ of the correlation output Ra having no correlation peak. Based on this fact, the products of the peak values and the sums of the different correlation outputs, that is, $P_{bw} \cdot A_{aE}$ and $P_{aw} \cdot A_{bE}$, are subjected to comparison to form demodulation data. Hence, demodulation can be achieved stably even in the case where, for instance, the signal transmitting path is low in signal transmitting characteristic, thus causing noises.

Now, the principle of carrier detection will be described. The carrier detection is determined when the absolute value of $(P_{bw} \cdot A_{aE} - P_{aw} \cdot A_{bE})$ exceeds a predetermined threshold level $Th_p$. The presence of the carrier means that one of the correlation outputs has a correlation peak. Therefore, the absolute value of the difference between the products of the peak values and the sums of two different correlation outputs is relatively large. On the other hand, in the case where there is no carrier, the above-described absolute value is very close to zero (0). Thus, similarly as in the case of the data demodulation, the presence or absence of the carrier can be detected without being affected by noises etc.

The circuit shown in Fig. 28, being a digital circuit, operates in synchronization with the clock signal CK or $CK_m$; however, for simplification in description, the clock signal is not shown therein.

In the circuit, the correlation output Ra is latched by a latch circuit for one clock pulse, and applied to an absolute value circuit 252a. The output of the absolute value circuit 252a is applied to an addition circuit 255a and a maximum value hold circuit 254a. On the other hand, the window start pulse WL and the window stop pulse WH are applied to a window generating circuit 253, which outputs a window signal WS which is raised to "H" level with the W part. The window signal WS is applied, as an operation control signal, to a latch circuit 248 in the addition circuit 255a and to a latch circuit 246 in the maximum value hold circuit 254a.

In the addition circuit 255a, the latch circuit 248 operates only when the window signal WS is at "L" level in correspondence to the E part. The latch timing is determined by the clock signal. The absolute value of the correlation output Ra inputted is applied to an adder 247, where it is added to the preceding result of addition provided by the latch circuit 248 every clock signal, and the result of that addition is latched by the latch circuit 248. Thus, the addition circuit 255a outputs the sum $A_{aE}$, which is applied to a multiplier 256a.

In the maximum value hold circuit 254a, the latch circuit 246 operates only when the window signal WS is at "H" level in correspondence to the W part. The preceding maximum value latched by the latch circuit 246 is compared with the absolute value of the current correlation value Ra in a comparator 245. When the absolute value of the current correlation value is larger, then it is latched, as the latest maximum value, by the latch circuit 245. Thus, the maximum value hold circuit 254a outputs the peak value $P_{aw}$, which is applied to a multiplier 256b.

Similarly as in the case of the correlation output Ra, for the correlation output Rb a latch circuit 251b, an absolute value circuit 252b, a maximum value hold circuit 254b, and an addition circuit 255b are provided. The maximum value hold circuit 254b provides the peak value $P_{bw}$, which is applied to the multiplier 256a. The addition circuit 255b provides the sum $A_{bE}$, which is applied to the multiplier 256b.

The multiplier 256a outputs the product $P_{bw} \cdot A_{aE}$ which is applied to a comparator 257 and a subtraction and absolute value circuit 259. The multiplier 256b outputs the product $P_{aw} \cdot A_{bE}$, which is applied to the comparator 257 and the subtraction and absolute value circuit 259.

In the comparator 257, the product $P_{bw} \cdot A_{aE}$ and the product $P_{aw} \cdot A_{bE}$ are subjected to comparison, and a signal "1" or "0" is provided according to the result of comparison. The output signal is latched by a latch circuit 258 with the timing of the data interval end signal ED, and is outputted as the receiving data RXD. The data interval end signal ED resets the addition circuits 255a and 255b, and the maximum value hold circuits 254a and 254b.

On the other hand, in the subtraction and absolute value circuit 259, the subtraction of ($P_{bw} \cdot A_{aE}$ - $P_{aw} \cdot A_{bE}$) is performed, and the absolute value of the result of subtraction is obtained. The absolute value is applied to a comparison circuit 260, where it is compared with the threshold value $Th_P$. When the absolute value is larger than the threshold value $Th_P$, the comparison circuit 260 outputs a carrier detection signal PAS.

Synchronous Control Circuit 125

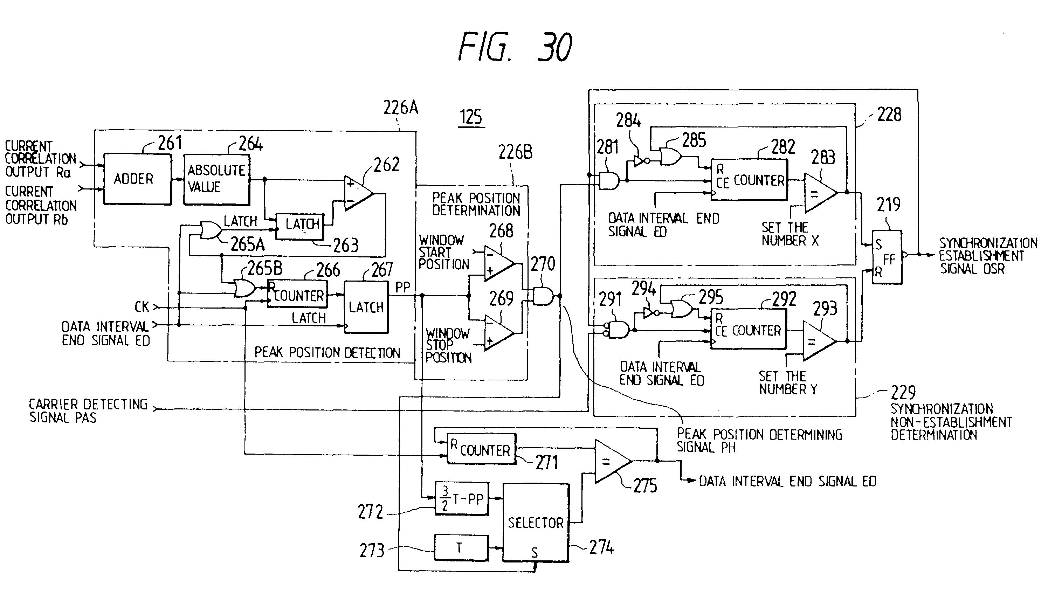

Fig. 30 shows one example of the arrangement of the synchronous control circuit 125 of the embodiment of the invention shown in Fig. 5. The circuit 125 includes a peak position detecting circuit 226A, a peak position determining circuit 226B, a synchronization establishment determining circuit 228, and a synchronization non-establishment determining circuit 229.

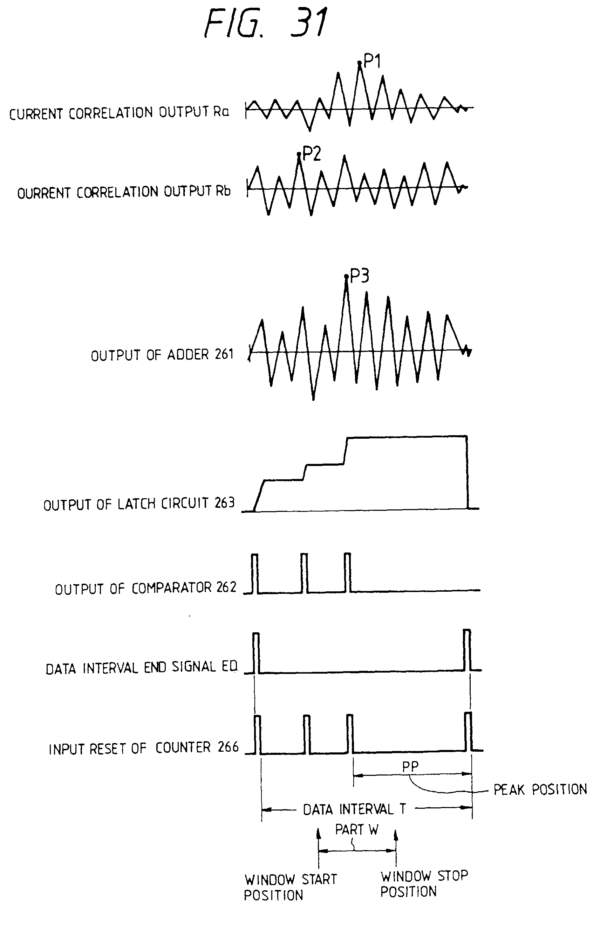

The peak position detecting circuit 226A is to detect the position of the peak of the correlation output in the data interval T. As shown in Fig. 31, the peak position PP is measured as a period of time which elapses from the time instant that the maximum value appears in the correlation output until the data interval end signal ED occurs. In the embodiment, the peak position is where the sum of the two correlation outputs Ra and Rb is maximum in absolute value.

The two correlation outputs Ra and Rb are applied to an adder 261, where they are subjected to addition. The output of the adder 261 is applied to an absolute value circuit 264, so that the absolute value of the sum of the correlation outputs is obtained. The absolute value is applied to one input terminal of a comparison circuit 262 and to a latch circuit 263. When the signal ED indicating the end of the preceding data interval is applied through an OR circuit 265A, as a latch timing signal, to the latch circuit 263, the output of the absolute value circuit 264 is latched as an initial value. The value latched by the latch circuit 263 is applied to the other input terminal of the comparison circuit 262. Thereafter, the output of the absolute value circuit 264 is compared with the value latched by the latch circuit 263 (every clock pulse of the clock s'ignal CR). When the absolute value circuit 264 provides an output which is larger than the value latched by the latch circuit 263, the output of the comparison circuit 262 is applied through the OR circuit 265A to the latch circuit 263, and the output of the absolute value circuit 264 is latched, as the latest value, by the latch circuit 263. Thus, the latch circuit 263 latches a largest value at all times.

On the other hand, a counter 266 for counting the clock signal CK is reset (cleared) by the data interval end signal ED applied through an OR circuit 265B, or by the comparison output of the comparison circuit 262 which is also applied through the OR circuit 265B, so that the counter starts its counting operation beginning with zero (0). The output of the counter 266 is latched by a latch circuit 267 in response to the next data interval end signal ED. Thus, the counter 266 counts the clock signal CR for the period of time which elapses from the time instant that the peak value occurs in the data interval T until the signal ED indicating the end of the data interval T is provided. The count value of the counter is latched by the latch circuit 267, thus representing the peak position PP.

The data PP representing the peak position thus detected is applied to the peak position determining circuit 226B. The peak position determining circuit 226B is to determine whether or not the peak position detected is in the W part. As is apparent from the above description, the correlation peak should be in the W part both in the receiving data demodulation and in the carrier detection. If the correlation peak is not in the W part, then it is impossible to perform receiving data demodulation and the carrier detection correctly.

In the peak position determining circuit 226B, comparators 268 and 269 and an AND circuit 270 form a window type digital comparison circuit. Data representing the start position of the W part has been set in the comparator 268, and data representing the stop (or end) position of the W part has been set in the other comparator 269. Only when the data representing the peak position PP is between the start position and the stop position, the AND circuit 270 outputs a peak position determination signal PH. Corresponding waveform timing diagrams are shown in Fig. 31.

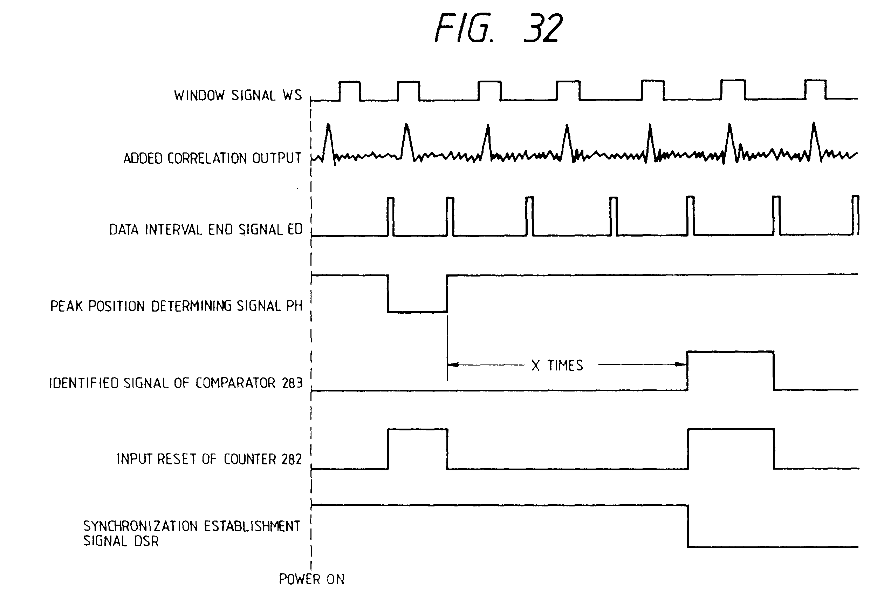

The arrangement and operation of a synchronization establishing circuit including the synchronization establishment determining circuit 228 will be described with reference to Fig. 30. Corresponding waveform timing diagrams are shown in Fig. 32.

The circuit includes two registers 272 and 273. The data representing the peak position PP is applied to the register 272, in which data representing ((3/2)T - PP) is set, where T is the data representing the length (time) of the data interval. On the other hand, the data T has been set in the register 273. The registers 272 and 273 are connected to a selector 274. The selector 274 selects, according to the state of the peak position determination signal PH, one of the data set in those registers 272 and 273, and applies it to one input terminal of a digital comparator 275.

On the other hand, a counter 271 counts the clock signal CK, and the count output is applied to the other input terminal of the digital comparator 275. The digital comparator 275 produces the data interval end signal (coincidence signal) ED when the count value of the counter 271 is equal to the set data received through the selector 274. The counter 271 is reset by the signal ED, thus starting its counting operation from zero (0).

For instance when the power switch is turned on, the correlation output is not synchronous with the data interval, and therefore sometimes there is no correlation peak in the W part. In this case, the peak position determination signal PH is set to "L" level, and the selector 274 selects the set data ((3/2)T - PP) of the register 272, and applies it to the comparator 275. The set data ((3/2)T - PP) is to produce the next data interval end signal ED so that the length (time) between the next peak and the next data interval end signal be T/2. When the peak is thereafter found in the W part, then the peak position determination signal pH is raised to "H" level, and the selector 274 selects the set data T of the register 273. As a result, thereafter the data interval end signal ED occurs with a period of T.

It is said that when the peak position is provided in the W part of the data interval occurs consecutively for a predetermined number of times (X times), synchronization has been established. In the synchronization establishment determining circuit 228, a counter 282 is placed in clock enable state by the "H" level peak position determination signal PH applied thereto through an AND gate 281, thus counting the data interval end signal ED. When the signal PH is at "L" level, the counter 282 is reset by the signal PH which is applied through a NOT circuit 284 and an OR circuit 285. The counter output of the counter 282 is applied to a digital comparator 283, in which the predetermined number of times (X times) used for determination of the synchronization establishment has been set. Therefore, when the count value of the counter 282 reaches the value X, the digital comparator 283 outputs a coincidence signal to set a flip-flop circuit 219, and the latter 219 outputs a synchronization establishment signal DSR ("L" level). The coincidence signal outputted by the comparator 283 is applied through the OR circuit 285 to the counter 282 to reset the latter 282. The synchronization establishment signal DSR is applied to the AND circuit 281 to close it; thus, application of the peak position determination signal PH is discontinued.

If the peak position determination signal PH is set to "L" level even once while the counter 282 is counting the signal ED, then the counter 282 is reset. Therefore, only when, with the signal PH at "H" level, an X number of the signals PH are inputted successively, the synchronization establishment is determined. When the signal PH is set to "L" level before the synchronization establishment is determined, then the selector 274 selects the register 272, and the timing of production of the data interval end signal ED is adjusted.

The synchronization non-establishment determining circuit 229 is provided to determine the condition when the carrier detection signal PAS is not provided in a predetermined number (Y) of data intervals. That condition indicates that synchronization is not established.

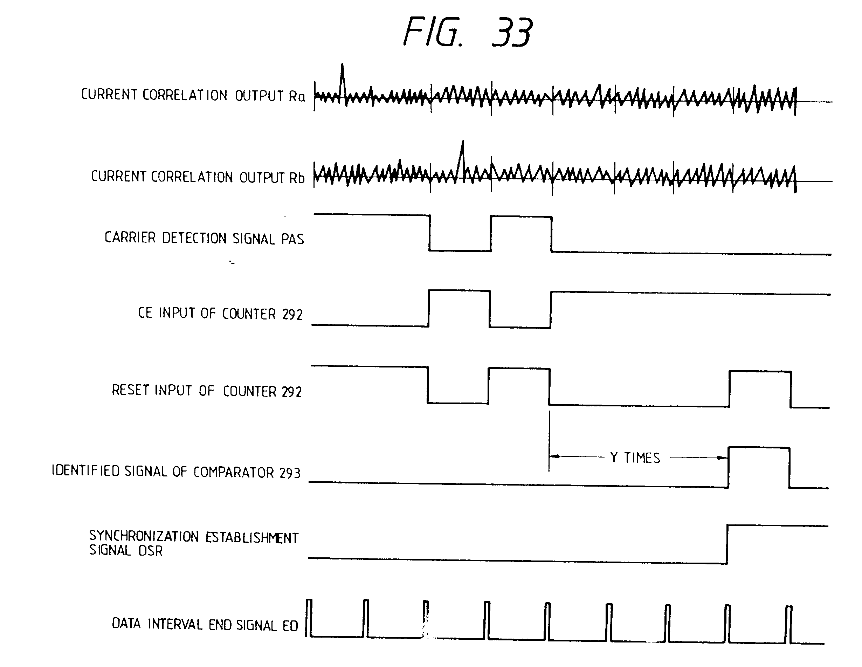

The synchronization non-establishment determining circuit 229 will be described with reference to Fig. 33. When synchronization has been established, a NAND gate 291 is opened by the "L" level synchronization establishment signal DSR. When the carrier is detected, the carrier detecting signal PAS is at "H" level. And when the carrier is not detected, the carrier detection signal PAS is at "L" level. The signal PAS is applied through the NAND gate 291 to a counter 292; that is, an "H" level enable signal is applied to the clock enable terminal CE of the counter 292. The "H" level carrier detection signal PAS is applied through the NAND gate 291, a NOT circuit 294 and an OR circuit 295 to the counter 292 to reset the counter 292. When placed in an enable state, the counter 292 counts the data interval end signal ED. The count value of the counter 292 is applied to a digital comparator 293, in which the predetermined number Y has been set in advance. Therefore, when the count value of the counter 292 reaches the value Y, the comparator 293 outputs a coincidence signal to reset the flip-flop circuit 219, so that the synchronization establishment signal DSR is raised to "H" level.

The "H" level signal DSR closes the NAND gate 291. The output signal of the comparator 293 is applied through the OR circuit 295 to the counter 292, to reset the counter 292.

When the carrier detection signal PAS is raised to "H" level while the counter 292 is in operation, the counter 292 is reset. That is, only when the carrier is not detected with a Y number of data intervals, it is determined that the synchronization is not established.

Thus, the temporary non-detection of the carrier, for instance, due to variations in the transmission characteristic of the signal transmission path, and the non-detection of the carrier due to the ending of communication (the synchronization is intentionally not established) can be clearly distinguished from each other.

IV. <u>CSK Modem</u>

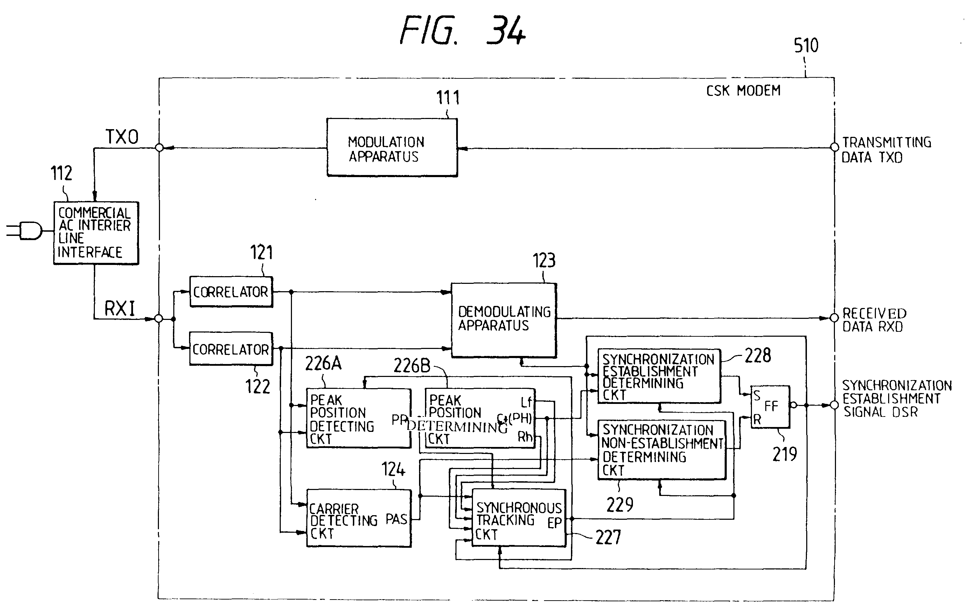

Fig. 34 shows one embodiment of a modem 510 incorporating a CSK signal transmitting apparatus and a CSK signal receiving apparatus according to the present invention. The CSK modem incorporates a signal transmitting apparatus including the modulator shown in Fig. 5, the transmitting interface 112A, the receiving interface 112B, and a signal receiving apparatus including the correlators 121 and 122, the demodulator 123, the carrier detecting circuit 124 and the synchronous control circuit 125 of Fig. 5.

The signal transmitting apparatus includes the modulator 111 which is adapted to CSK-modulate transmitting data TXD by using Manchester M series codes. The modulated transmitting signal TXO provided by the modulator is applied to a commercial AC interior line interface 112. In this embodiment, power line communication is carried out in which a commercial AC power line (for instance of 100V) is employed as a signal transmitting line. The transmitting signal TXO is converted into a signal suitable for power line communication by the interface 112, and the signal, being superposed on the commercial alternate current, is applied to the power line.

In the interface 112, a signal transmitted over the power line from another modem is received, and separated from the commercial alternate current, and subjected to signal conversion (including digital conversion) as required. The signal thus processed is applied, as a received signal RXI, to the signal receiving apparatus in the modem.

The signal receiving apparatus includes the correlators 121 and 122, the demodulator 123, the carrier detecting circuit 124, the peak position detecting circuit 226A, the peak position determining circuit 226B, a synchronous tracking circuit 227, the synchronization establishment determining circuit 228, the synchronization non-establishment determining circuit 229, and the flip-flop circuit 219 for outputting the synchronization establishment signal DSR. The circuits 226A, 226B, 227, 228, 229 and 219 correspond to the synchronous control circuit 125 in Fig. 5, thus being substantially equal to those shown in Fig. 30. In Fig. 30, the synchronous control circuit includes no synchronous tracking circuit, for simplification in description.

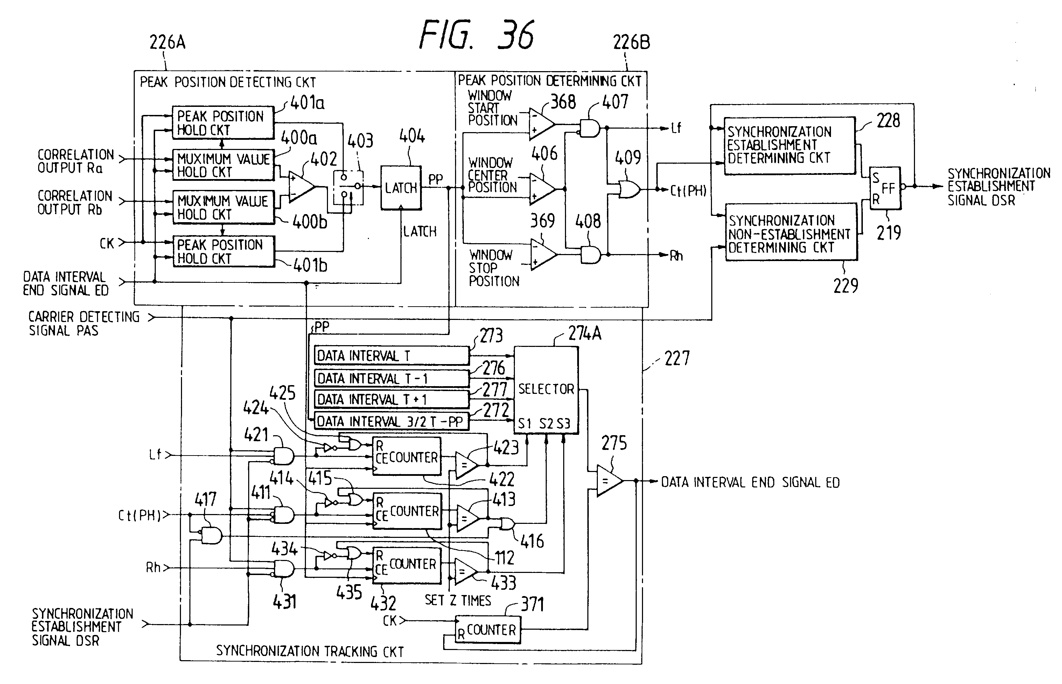

An embodiment of the synchronous control circuit including the synchronous tracking circuit is as shown in Fig. 36. The circuit 227 has the above-described synchronization establishing function of establishing synchronization so that the correlation peak occurs with the W part of the data interval; and a function of somewhat adjusting the timing of generation of the data interval end signal ED so that the peak position be at the center of the W part.

In Fig. 36, the peak position detecting circuit 226A and the peak position determining circuit 226B are somewhat different in arrangement from those shown in Fig. 30. This will be described in more detail.

In the peak position detecting circuit 226A shown in Fig. 30, the two correlation outputs Ra and Rb are subjected to addition, and the peak position of the absolute value thereof is detected. On the other hand, in the circuit in Fig. 36, the peak positions of the correlation outputs Ra and Rb are detected separately, and the peak values thereof are also detected separately. And the peak position larger in peak value is determined as the final peak position.

The correlation outputs Ra and Rb are applied to maximum value hold circuits (peak value detecting circuits) 400a and 400b, respectively. Each of the maximum value hold circuits is made up of an absolute value circuit 264, a latch circuit 263, a comparator 261 and an OR circuit 265A which are similar to those shown in Fig. 30, and the maximum value of each data interval is held by the latch circuit 263. The maximum values (peak values) of the data intervals of the correlation outputs Ra and Rb are applied to a comparison circuit 402, where they are subjected to comparison.

Peak position hold circuits 401a and 401b are provided for the correlation outputs Ra and Rb, respectively. Each of the peak position hold circuits is made up of an OR circuit 265B, a counter 266 and a latch circuit 267 which are similar to those shown in Fig. 30. The hold peak position of the peak position hold circuits 401a and 401b are supplied to a change-over switch 403.

The change-over switch 403 is to select the larger of the peak values which are compared with each other by the comparison circuit 402. The peak value selected by the change-over switch 403 is latched by a latch circuit 404 in response to the provision of the data interval end signal ED.

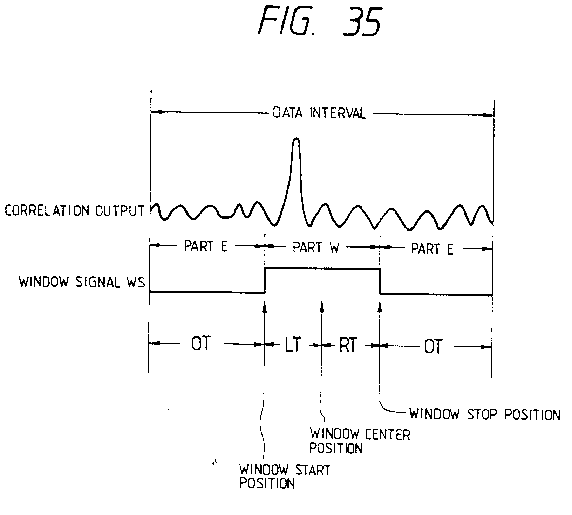

The peak position determining circuit 226B shown in Fig. 36 can be obtained by adding a comparator 406, and AND gates 407 and 408 controlled by the output of the comparator 406 to the circuit elements of the peak position determining circuit shown in Fig. 30. Data representing the window part (W part) center position has been set in the comparator 406 (cf. Fig. 35). The peak position PP detected is applied to the comparator 406, so that it is determined whether the peak position PP detected is located on the left side of the center of the W part (which is the region closer to the start position (hereinafter referred to as "an LT region", when applicable) or on the right side (which is the region closer to the stop position (hereinafter referred to as "an RT region", when applicable). When the peak position is in the LT region, the AND gate 407 is opened, and the output of the comparator 368 is therefore provided as a left side decision signal Lf; when it is in the RT region, the output of the comparator 369 is provided, as a right side decision signal Rh, through the AND gate 408. The signals Rh and Lf are applied to the OR circuit 409. The latter 409 outputs a signal Ct corresponding to the peak position determination signal PH, which is applied to a synchronization establishment determining circuit. When the peak position PP is in the W part, the signal Ct is at "H" level. When the peak position PP is in any one of the E parts (OT regions) of the data interval, the signal Ct is at "L" level. Those signal Lf, Ct and Rh are applied to the synchronous tracking circuit 227.

In the synchronous tracking circuit, circuit elements which have been described with reference to Fig. 30 are therefore designated by the same reference numerals or characters. The synchronous tracking circuit has, in addition to the registers 273 and 272 in which the data T and (3/2)T - PP have been set, registers 276 and 277 in which data T - 1 and T + 1 have been set. In the data T - 1 and T + 1, the value "1" is much smaller than the value "T". For instance in the case where the shift register receiving the received signal RXI has 248 stages (for instance, a 31-bit Manchester M series is used, and each bit thereof is assigned to eight cells: m = 8), T is set to 248. The data T - 1 and T + 1 of the registers 276 and 277 are used to slightly adjust the data interval thereby to slightly shift (synchronously tracking) the peak positions of the correlation outputs Ra and Rb so that they approach the center of the W part. The data set in those registers 273, 276, 277 and 272 are applied to a selector 274A. The selector 274A selects the data T - 1 of the register 276 when a signal S1 ("H" level) is inputted, the data (3/2)T - PP of the register 272 when a signal S2 ("H" level) is inputted; the data T + 1 of the register 277 when a signal S3 ("H" level); and the data T of the register 273 in the other cases where the signals S1, S2 and S3 are at "L" level. The data thus selected are applied to a comparator 275.

When the synchronization is not established yet, the synchronization establishment signal DSR is at "H" level, and an AND gate 417 is open. If, in this case, the detected peak position is in the OT region (the E part), then signal Ct is at "L" level, and the output of the AND gate 417 is raised to "H" level. The "H" level output signal is applied through an OR circuit 416, as the signal S2, to the selector 274A. Therefore, the data (3/2)T - PP of the register 272 is applied to the comparator 275, and the above-described synchronization establishment processing is carried out.

AND gates 421, 411 and 431, which receive the above-described signals Lf, Ct and Rh, respectively, are controlled by the synchronization establishment signal DSR and the carrier detection signal PAS. That is, when synchronization has been established (with the signal DSR at "L" level) and the carrier has been detected (with the signal PAS at "H" level), the AND gates 421, 411 and 431 are opened, to transmit the signals Lf, Ct and Rh.

A circuit receiving the signal LF will be described. The left side decision signal Lf ("H" level) outputted when the peak position is in the LT region is applied through the AND gate 421 to the clock enable terminal CE of a counter 422. In response to the enable signal, the counter 422 counts the data interval end signal ED. The count value of the counter 422 is applied to a comparator 423, in which a predetermined value Z (larger than one (1)) has been set in advance. When the count value of the counter 422 reaches the set value Z, the comparator 423 provides an output ("H" level), which is applied, as the signal S1, to the selector 274A. As a result, the selector 274A selects the data T - 1, and therefore the period of the next data interval is set to (T - 1) a value shorter than T. In the case where the peak position of the correlation output occurs in the LT region Z times successively, the period of the next data interval is slightly decreased so as to cause the peak position to approach the center of the W part.

The counter 422, the comparator 423, a NOT circuit 423, and an OR circuit 425 form a deflection determining circuit. With the deflection determining circuit, it is detected whether or not the peak position occurs in the LT region Z times successively. Therefore, instead of the temporary deflection of the peak position, the steady deflection tendency of the peak position can be detected, and the data interval end signal ED is formed so as to correct the deflection of the peak position. Thus, the synchronous tracking operation is carried out stably.

The counter 422 is reset by the "L" level output of the AND gate 421 (which is raised to "H" level by the NOT circuit 424) or the "H" level output of the comparator 4123 which is applied to the OR circuit 425.

Another deflection determining circuit is formed by a counter 432, a comparator 433, a NOT circuit 434, and an OR circuit 435. The deflection determined circuit thus formed detects whether or not the peak position occurs in the RT region Z times successively. When the peak position occurs in the RT region Z times successively, the comparator 433 outputs the signal S3. As a result, the period of the next data interval is set to (T + 1) a value slightly larger than T, to cause the peak position to approach the center of the W part.

A counter 412, a comparator 413, a NOT circuit 414, and an OR circuit 415 together form an non-synchronization detecting circuit. When the peak position is in the E part (the OT) region, the signal Ct is at "L" level, The "L" level signal Ct is applied to the AND gate 411, so that the "H" level signal is applied to the clock enable terminal EC of the counter 412, and the latter 412 starts counting the data interval end signal ED. When the count value of the counter 412 reaches the value Z, the comparator 413 outputs an "H" level signal, which is applied through an OR circuit 416, as the signal S2, to the selector 274. Thus, the non-synchronization detecting circuit detects that the peak position does not occur in the W part Z times successively. And, when the data ((3/2)T - PP) of the register 272 is applied to the comparator 275, the synchronization establishment process is carried out again.

In the cases other than those described above (the outputs of the comparators 413, 423 and 433 are at "L" level, the data T of the register 273 is selected, and the period of the data interval is set to T. In the above-described embodiment, the same number of times Z is set in the comparators 412, 423, and 433; however, different numbers of times may be set in them.

Synchronization is established and corrected in the above-described manner. Therefore, the peak position can be maintained at the center of the W part even when the signal transmission characteristic varies or the clock signal shifts.

In the present invention, it is unnecessary that the Manchester M series on the signal receiving side be strictly synchronous with those on the signal transmitting side. That discrepancy would not cause an error in data demodulation. Furthermore, the outputs of the correlators are provided as absolute values; thus, no error -is caused even with a deterioration in the signal transmission characteristic of the signal transmitting path which makes the transmission peak value negative. In addition, the use of the Manchester code M series reduces the low frequency components of the receiving signal, thus suppressing the coupling loss with signal transmitting path. Accordingly, electric power lines high in noise level can be effectively used as the signal transmitting path. That is, although the noise of the electric power line includes a wide range of low frequency components, the communication system according to the invention is scarcely affected by such noise.

## Claims

1. A Code Shift Keying Communication apparatus for spread spectrum communication, comprising:

   a two series modulator (11, 111) for generating one of two Manchester M series with a predetermined period in response to each input data bit in a transmitting data binary bit stream, in which modulator one of said two Manchester M series is generated in response to a first binary state of said input data bit and the other of said two Manchester M series is generated in response to the other binary state of said input data bit, said two Manchester M series being equal in code length;

   wherein said Manchester M series to actually be transmitted has an absolute auto-correlation value, the maximum value of which is always greater than a cross-correlation value of said two Manchester M series;

   wherein said two series modulator (11, 111) comprises

   means (131) for generating one of said two Manchester M series;

   means (132) for generating the other of said two Manchester M series; and

   means (133) for selectively switching one of said generated Manchester M series as the output of said two series modulator (11, 111), based on the binary state of said input data bit; said switching being synchronous with the period of said two Manchester M series;

   means (12, 112A) for transmitting said Manchester M series for each input data bit over a transmission medium,

   receiving interface means (13, 112B) for receiving the two Manchester M series from said transmission medium; and

   forming means (14, 114), responsive to each said Manchester M series received by said receiving interface means (13, 112B), for forming a received data bit; each said received data bit having a binary state corresponding to the binary state of the input data bit according to which said transmitted Manchester M series over said transmission medium was generated by said two series modulator (11, 111) wherein said forming means (14, 114) is a two series demodulating circuit comprising:

   first correlating means (121) for correlating each said received Manchester M series with a fixed pattern of one of said two Manchester M series which has been set in said first correlating means and outputting a first correlation output signal;

   second correlating means (122) for correlating each said received Manchester M series with a fixed pattern of the other of said two Manchester M series which has been set in said second correlating means and outputting a second correlation output signal;

means (123) for demodulating said first and second correlation output signals to form a corresponding said received data bit; characterized by

synchronous control means (125) responsive to said first and second correlation output signals for synchronising said first and second correlation output signals with a data interval T equal to one period of the Manchester M series.

2. The apparatus as recited in claim 1, wherein said two series demodulating circuit further comprises means (124) for carrier detection to determine whether a carrier signal is received.

3. The apparatus as recited in claim 2, wherein said synchronous control means (125) comprises:

detecting means for detecting the peak of the absolute value of the sum of said first and second correlation output signals;

determining means for determining whether said detected peak is within a predetermined portion of said data interval T; and

means responsive to a negative determination by said determining means, for establishing synchronisation between said first and second correlation output signals and said data interval T.

4. The apparatus as recited in claim 3, wherein said synchronous control means (125) further comprises means for determining the condition that no carrier has been detected for a predetermined number of data intervals T, and upon that condition for indicating that synchronisation has not been established, whereby temporary non-detection of the carrier due to variations in the transmission characteristic of the transmission medium and the non-detection of the carrier due to ending of communication are distinguished.

5. The apparatus as recited in claim 4, wherein said synchronous control means (125) further comprises synchronous tracking means for adjusting the period of the data interval T whereby the peak position subsequently detected by said detecting means moves closer to the center of said predetermined position of the data interval T.

6. A Code Shift Keying receiving apparatus, for a communication system in which communication system one of two Manchester M series with a predetermined period and equal in code length is generated by a generating means (11, 111) according to the binary state of each input data bit for transmission and wherein said generated Manchester M series is transmitted over a transmission medium, wherein said Manchester M series to actually be transmitted has an absolute auto-correlation value, the maximum value of which is always greater than a cross-correlation value of the two Manchester M series, the Code Shift Keying receiving apparatus comprising:

receiving interface means (13, 112B) for receiving said Manchester M series from said transmission medium; and

a two series demodulating circuit (14, 114) responsive to each said received Manchester M series from said receiving interface means (13, 112B) for forming a received data bit; each said received data bit having a binary state corresponding to the binary state of the input data bit according to which said transmitted Manchester M series over said transmission medium was generated by said generating means; said two series demodulating circuit (14, 114) comprising:

first correlating means (121) for correlating each said received Manchester M series with a fixed pattern of one of said two Manchester M series which has been set in said first correlating means (121) and outputting a first correlation output signal;

second correlating means (122) for correlating each said received Manchester M series with a fixed pattern of the other of said two Manchester M series which has been set in said second correlating means (122) and outputting a second correlation output signal; and

means (123) for demodulating said first and second correlation output signals to form a corresponding said received data bit, characterized by

synchronous control means (125) responsive to said first and second correlation output signals for synchronising said first and second correlation output signals with a data interval T equal to one period of the Manchester M series.

7. The apparatus as recited in claim 6, wherein said two series demodulating circuit further comprises means (124) for carrier detection to determine whether a carrier signal is received.

**8.** The apparatus as recited in claim 6, wherein said two series demodulating circuit (14, 114) further comprises:

means (124) responsive to said first and second correlation output signals for carrier detection to determine whether a carrier signal is received.

**9.** The apparatus as recited in claim 8, wherein said synchronous control means (125) comprises:

detecting means for detecting the peak of the absolute value of the sum of said first and second correlation output signals;

determining means for determining whether said detected peak is within a predetermined portion of said data interval T; and

means responsive to a negative determination by said determining means, for establishing synchronisation between said first and second correlation output signals and said data interval T.

**10.** The apparatus as recited in claim 9, wherein said synchronous control means (125) further comprises means for determining the condition that no carrier has been detected for a predetermined number of data intervals T, and upon that condition for indicating that synchronisation has not been established, whereby temporary non-detection of the carrier due to variations in the transmission characteristic of the transmission medium and the non-detection of the carrier due to ending of communication are distinguished.

**11.** The apparatus as recited in claim 10, wherein said synchronous control means (125) further comprises synchronous tracking means for adjusting the period of the data interval T whereby the peak position subsequently detected by said peak detecting means moves closer to the center of said predetermined position of the data interval.

**12.** A Code Shift Keying method for spread spectrum communication, comprising the steps of:

generating one of two Manchester M series with a predetermined period with a two series modulator in response to each input data bit for transmission, according to the binary state of said input data bit; one of said two Manchester M series corresponding to one of said binary states and the other of said two Manchester M series corresponding to the other of said binary states, said two Manchester M series being equal in code length; wherein said Manchester M series to actually be transmitted has an absolute auto-correlation value, the maximum value of which is always greater than a cross-correlation value of said two Manchester M series; and

transmitting said generated Manchester M series over a transmission medium;

receiving said Manchester M series from said transmission medium;

forming a received data bit having a binary state corresponding to that of the input data bit according to which said received Manchester M series was generated

wherein said forming step comprises the steps of:

correlating each said received Manchester M series with a fixed pattern of one of said Manchester M series to provide a first correlation output signal;

correlating each said received Manchester M series with a fixed pattern of the other of said two Manchester M series to provide a second correlation output signal;

demodulating said first and second correlation output signals to form a corresponding said received data bit;

synchronising both said correlating steps with a data interval T equal to one period of the Manchester M series and wherein said synchronising step comprises the steps of:

detecting the peak of the absolute value of the sum of said first and second correlation output signals;

determining whether said detected peak is within a predetermined portion of said data interval T; and

in response to a negative determination provided by said determining step, establishing synchronisation between said first and second correlation output signals and said data interval T.

**13.** The method as recited in claim 12, wherein said transmitting step comprises a step for converting said generated code series into a form corresponding to said transmission medium for transmission thereon.

**14.** The method as recited in claim 13, wherein said generating step comprises the steps of:

generating one of said two Manchester M series;

generating the other of said two Manchester M series; and

selectively switching one of said generated Manchester M series as the output of said generating step, according to the binary state of a corresponding said data bit for transmission; said switching being synchronous with the period of said two Manchester M series.

**15.** The method as recited in claim 12, wherein said forming step further comprises a step of:
detecting from said first and second correlation output signals whether a carrier signal is received.

**16.** The method as recited in one of claims 12 or 15 wherein said synchronising step further comprises the step of determining the condition that no carrier has been detected for a predetermined number of data intervals T, and upon that condition indicating that synchronisation has not been established, whereby temporary non-detection of the carrier due to variations in the transmission characteristic of the transmission medium and the non-detection of the carrier due to ending of communication are distinguished.

**17.** The method as recited in claim 16 wherein said synchronising step further comprises the step of:
adjusting the period of said data interval T whereby the peak position subsequently detected by said peak detecting step moves closer to the center of said predetermined portion of the data interval.

**18.** A Code Shift Keying receiving method for spread spectrum communication in which communication one of two Manchester M series with a predetermined period and equal in code length is generated according to the binary state of each input data bit for transmission; wherein said Manchester M series to actually be transmitted has an absolute auto-correlation value, the maximum value of which is always greater than a cross-correlation value of the two Manchester M series,

and wherein said generated Manchester M series is transmitted over a transmission medium,

comprising the steps of:

receiving said Manchester M series from said transmission medium;

forming a received data bit having a binary state corresponding to the state of the input data bit according to which said received Manchester M series was generated; and

wherein said forming step comprises the steps of:

correlating each said received Manchester M series with a fixed pattern of one of said Manchester M series to provide a first correlation output signal;

correlating each said received Manchester M series with a fixed pattern of the other of said two Manchester M series to provide a second correlation output signal;

demodulating said first and second correlation output signals to form a corresponding said received data bit;

synchronising both said correlating steps with a data interval T equal to one period of the Manchester M series, and

wherein said synchronising step comprises the steps of:

detecting the peak of the absolute value of the sum of said first and second correlation output signals;

determining whether said detected peak is within a predetermined portion of said data interval T; and

in response to a negative determination provided by said determining step, establishing synchronisation between said first and second correlation output signals and said data interval T.

**19.** The method as recited in claim 18, wherein said forming step further comprises a step of:
detecting from said first and second correlation output signals whether a carrier signal is received.

**20.** The method as recited in claim 18, wherein said synchronising step comprises the step of:

determining the condition that no carrier has been detected for a predetermined number of data intervals T, and upon that condition for indicating that synchronisation has not been established;

whereby temporary non-detection of the carrier due to variations in the transmission characteristic of the transmission medium and the non-detection of the carrier due to ending of communication are distinguished.

21. The method as recited in one of claims 18 and 20, wherein said synchronising step further comprises the step of:

adjusting the period of said data interval whereby the peak position subsequently detected by said peak detecting step moves closer to the center of said predetermined portion of the data interval T.

**Patentansprüche**

1. Kommunikationsvorrichtung mit einer Tastung mit wechselnder Codierung für Spreizspektrumkommunikation mit:

einem Zweiserienmodulator (11, 111) zur Erzeugung einer von zwei Manchester-M-Serien mit einer vorbestimmten Periode in Reaktion auf jedes Eingabedatenbit in einem binären Übertragungsdatenbitstrom, wobei in dem Modulator eine von zwei Manchester-M-Serien in Reaktion auf einen ersten Binärzustand des Eingabedatenbits und die andere der zwei Manchester-M-Serien in Reaktion auf den anderen Binärzustand des Eingabedatenbits erzeugt ist, wobei die zwei Manchester-M-Serien die gleiche Codelänge aufweisen;

wobei die Manchester-M-Serie, die tatsächlich übermittelt werden soll, einen absoluten Autokorrelationswert aufweist, dessen maximaler Wert immer größer als ein Kreuzkorrelationswert der zwei Manchester-M-Serien ist;

wobei der Zweiserienmodulator (11, 111) folgendes aufweist:

Mittel (131) zur Erzeugung einer der zwei Manchester-M-Serien;

Mittel (132) zur Erzeugung der anderen der zwei Manchester-M-Serien; und

Mittel zum selektiven Schalten einer der erzeugten Manchester-M-Serien als Ausgang des Zweiserienmodulators (11, 111) basierend auf dem Binärzustand des Eingabedatenbits; wobei das Schalten mit der Periode der zwei Manchester-M-Serien synchron ist;

Mittel (12, 112A) zur Übertragung der Manchester-M-Serien für jedes Eingabedatenbit über ein Übertragungsmedium,

Empfangs-Interfacemittel (13, 112B) für das Empfangen der zwei Manchester-M-Serien von dem Übertragungsmedium; und

ein Bildungsmittel (14, 114), das auf jede von den Empfangs-Interfacemitteln (13, 112B) empfangene Manchester-M-Serie anspricht, um ein empfangenes Datenbit zu bilden; wobei jedes empfangene Datenbit einen Binärzustand entsprechend dem Binärzustand des Datenbits aufweist, wonach die über das Übertragungsmedium übertragene Manchester-M-Serie durch den Zweiserienmodulator (11, 111) erzeugt wurde, wobei es sich bei dem Bildungsmittel (14, 114) um einen Zweiseriendemodulierungskreis handelt, welcher folgendes aufweist:

erste Korrelationsmittel (121) zur Korrelation jeder der empfangenen Manchester-M-Serien mit einem festen Muster einer der zwei Manchester-M-Serien, welche in dem ersten Korrelationsmittel festgesetzt wurde, und Ausgabe eines ersten Korrelationsausgangssignals;

zweite Korrelationsmittel (122) zur Korrelation jeder der empfangenen Manchester-M-Serien mit einem festen Muster des anderen der zwei Manchester-M-Serien, welche in dem zweiten Korrelationsmittel festgesetzt wurde, und Ausgabe eines zweiten Korrelationsausgangssignals;

Mittel (123) zum Demodulieren des ersten und des zweiten Korrelationsausgangssignals zur Bildung eines entsprechenden empfangenen Datenbits, gekennzeichnet durch

Synchronsteuermittel (125), die auf das erste und das zweite Korrelationsausgangssignal ansprechen, zum Synchronisieren des ersten und des zweiten Korrelationsausgangssignals mit einem Datenintervall T gleich einer Periode der Manchester-M-Serien.

2. Vorrichtung gemäß Anspruch 1, bei der der Zweiseriendemodulierungskreis des weiteren Mittel (124) zur Trägererfassung aufweist, um zu bestimmen, ob ein Trägersignal empfangen ist.

3. Vorrichtung gemäß Anspruch 2, bei der das Synchronsteuermittel (125) folgendes aufweist:

Erfassungsmittel zur Erfassung der Spitze des absoluten Wertes der Summe des ersten und des zweiten Korrelationsausgangssignals;

Bestimmungsmittel zur Bestimmung, ob die erfaßte Spitze innerhalb eines vorbestimmten Bereichs des Datenintervalls T liegt; und

Mittel zum Ansprechen auf eine negative Bestimmung durch das Bestimmungsmittel zur Schaffung einer Synchronisierung zwischen dem ersten und dem zweiten Korrelationsausgangssignal und dem Datenintervall T.

4. Vorrichtung gemäß Anspruch 3, bei der das Synchronsteuermittel (125) des weiteren Mittel zur Bestimmung des Zustandes, daß kein Träger über eine vorbestimmte Anzahl an Datenintervallen T erfaßt wurde, aufweist, und in diesem Zustand, zur Anzeige, daß keine Synchronisierung geschaffen wurde, wodurch eine temporäre Nichterfassung des Trägers aufgrund von Variationen der Übertragungscharakteristik des Übertragungsmediums und Nichterfassung des Trägers aufgrund der Beendigung der Kommunikation unterschieden werden.

5. Vorrichtung gemäß Anspruch 4, bei der das Synchronsteuermittel (125) des weiteren Synchronnachführmittel aufweist, um die Periode des Datenintervalls T anzupassen, wodurch die nachfolgend durch die Erfasssungsmittel erfaßte Spitzenposition der Mitte der vorbestimmten Position des Datenintervalls T näherkommt.

6. Empfangsvorrichtung mit einer Tastung mit wechselnder Codierung für ein Kommunikationssystem, wobei bei dem Kommunikationssystem eine von zwei Manchester-M-Serien mit einer vorbestimmten Periode und gleicher Codelänge durch ein Erzeugungsmittel (11, 111) gemäß dem Binärzustand jedes Eingabedatenbits zur Übertragung erzeugt wird, und wobei die erzeugte Manchester-M-Serie über ein Übertragungsmedium übertragen wird, wobei die Manchester-M-Serie, welche tatsächlich übertragen werden soll, einen absoluten Autokorrelationswert aufweist, dessen maximaler Wert immer größer als ein Kreuzkorrelationswert der zwei Manchester-M-Serien ist, wobei die Empfangsvorrichtung mit einer Tastung mit wechselnder Codierung folgendes aufweist:
   Emfangs-Interfacemittel (13, 112B) für das Empfangen der Manchester-M-Serien von dem Übertragungsmedium; und
   einen Zweiseriendemodulierungskreis (14, 114), der auf jede empfangene Manchester-M-Serie von den Empfangs-Interfacemitteln (13, 112B) anspricht, um ein empfangenes Datenbit zu bilden;

wobei jedes empfangene Datenbit einen Binärzustand entsprechend dem Binärzustand des Datenbits aufweist, wonach die übertragene Manchester-M-Serie über das Übertragungsmedium durch das Erzeugungsmittel erzeugt wurde; wobei der Zweiseriendemodulierungskreis (14, 114) folgendes aufweist:

   erste Korrelationsmittel (121) zur Korrelation jeder der empfangenen Manchester-M-Serien mit einem festen Muster einer der zwei Manchester-M-Serien, welche in dem ersten Korrelationsmittel (121) festgesetzt wurde, und Ausgabe eines ersten Korrelationsausgangssignals;

   zweite Korrelationsmittel (122) zur Korrelation jeder der empfangenen Manchester-M-Serien mit einem festen Muster der anderen der zwei Manchester-M-Serien, welche in dem zweiten Korrelationsmittel (122) festgesetzt wurde, und Ausgabe eines zweiten Korrelationsausgangssignals;

   Mittel (123) zum Demodulieren des ersten und des zweiten Korrelationsausgangssignals zur Bildung eines entsprechenden empfangenen Datenbits, gekennzeichnet durch

   Synchronsteuermittel (125), die auf das erste und das zweite Korrelationsausgangssignal ansprechen, zum Synchronisieren des ersten und des zweiten Korrelationsausgangssignals mit einem Datenintervall T gleich einer Periode der Manchester-M-Serien.

7. Vorrichtung gemäß Anspruch 6, bei der der Zweiseriendemodulierungskreis des weiteren Mittel (124) zur Trägererfassung aufweist, um zu bestimmen, ob ein Trägersignal empfangen ist.

8. Vorrichtung gemäß Anspruch 6, bei der der Zweiseriendemodulierungskreis (14, 114) des weiteren folgendes aufweist:
   auf das erste und das zweite Korrelationsausgangssignal ansprechende Mittel (124) zur Trägererfassung, um zu bestimmen, ob ein Trägersignal empfangen ist.

9. Vorrichtung gemäß Anspruch 8, bei der das Synchronsteuermittel (125) folgendes aufweist:

   Erfassungsmittel zur Erfassung der Spitze des absoluten Wertes der Summe des ersten und des zweiten Korrelationsausgangssignals;

   Bestimmungsmittel zur Bestimmung, ob die erfaßte Spitze innerhalb eines vorbestimmten Bereichs des Datenintervalls T liegt; und

Mittel zum Ansprechen auf eine negative Bestimmung durch das Bestimmungsmittel zur Schaffung einer Synchronisierung zwischen dem ersten und dem zweiten Korrelationsausgangssignal und dem Datenintervall T.

10. Vorrichtung gemäß Anspruch 9, bei der das Synchronsteuermittel (125) des weiteren Mittel zur Bestimmung des Zustandes, daß kein Träger über eine vorbestimmte Anzahl an Datenintervallen T erfaßt wurde, aufweist, und in diesem Zustand, zur Anzeige, daß keine Synchronisierung geschaffen wurde, wodurch eine temporäre Nichterfassung des Trägers aufgrund von Variationen der Übertragungscharakteristik des Übertragungsmediums und Nichterfassung des Trägers aufgrund der Beendigung der Kommunikation unterschieden werden.

11. Vorrichtung gemäß Anspruch 10, bei der das Synchronsteuermittel (125) des weiteren Synchronnachführmittel aufweist, um die Periode des Datenintervalls T anzupassen, wodurch die nachfolgend durch die Erfasssungsmittel erfaßte Spitzenposition der Mitte der vorbestimmten Position des Datenintervalls näherkommt.

12. Verfahren einer Tastung mit wechselnder Codierung zur Spreizspektrumkommunikation mit folgenden Schritten:

Erzeugung einer von zwei Manchester-M-Serien mit einer vorbestimmten Periode mit einem Zweiserienmodulator in Reaktion auf jedes Eingabedatenbit zur Übertragung gemäß dem Binärzustand des Eingabedatenbits; einer der zwei Manchester-M-Serien entsprechend dem einen der Binärzustände und der anderen der zwei Manchester-M-Serien entsprechend dem anderen der Binärzustände, wobei die zwei Manchester-M-Serien die gleiche Codelänge aufweisen; wobei die Manchester-M-Serie, die tatsächlich übermittelt werden soll, einen absoluten Autokorrelationswert aufweist, dessen maximaler Wert immer größer als ein Kreuzkorrelationswert der zwei Manchester-M-Serien ist; und

Übertragung der erzeugten Manchester-M-Serien über ein Übertragungsmedium;

Empfangen der Manchester-M-Serien von dem Übertragungsmedium;

Bilden eines empfangenen Datenbits mit einem Binärzustand entsprechend jenem des Eingabedatenbits, wonach die empfangene Manchester-M-Serie erzeugt wurde,

wobei der Bildungsschritt folgende Schritte aufweist:

Korrelation jeder der empfangenen Manchester-M-Serien mit einem festen Muster einer der Manchester-M-Serien zur Bereitstellung eines ersten Korrelationsausgangssignals;

Korrelation jeder der empfangenen Manchester-M-Serien mit einem festen Muster der anderen der zwei Manchester-M-Serien, zur Bereitstellung eines zweiten Korrelationsausgangssignals;

Demodulieren des ersten und des zweiten Korrelationsausgangssignals zur Bildung eines entsprechenden empfangenen Datenbits;

Synchronisieren beider Korrelationsschritte mit einem Datenintervall T gleich einer Periode der Manchester-M-Serien, und wobei der Synchronisierungsschritt folgendes aufweist:

Erfassen der Spitze des absoluten Wertes der Summe des ersten und des zweiten Korrelationsausgangssignals;

Bestimmung, ob die erfaßte Spitze innerhalb eines vorbestimmten Bereichs des Datenintervalls T liegt; und

ansprechend auf eine negative Bestimmung durch den Bestimmungsschritt, Schaffung einer Synchronisierung zwischen dem ersten und dem zweiten Korrelationsausgangssignal und dem Datenintervall T.

13. Verfahren gemäß Anspruch 12, bei dem der Übertragungsschritt einen Schritt zur Umwandlung der erzeugten Codeserien in eine Form entsprechend dem Übertragungsmedium zur Übertragung hierauf umfaßt.

14. Verfahren gemäß Anspruch 13, bei dem der Schritt der Erzeugung folgende Schritte umfaßt:

Erzeugung einer der zwei Manchester-M-Serien;

Erzeugung der anderen der zwei Manchester-M-Serien; und

selektives Schalten einer der erzeugten Manchester-M-Serien als Ausgang des Schrittes der Erzeugung gemäß dem Binärzustand eines entsprechenden Datenbits zur Übertragung; wobei das Schalten mit der Periode der zwei Manchester-M-Serien synchron ist.

15. Verfahren gemäß Anspruch 12, bei dem der Schritt der Bildung des weiteren folgenden Schritt aufweist:
Erfassung vom ersten und zweiten Korrelationsausgangssignal, ob ein Trägersignal empfangen ist.

16. Verfahren gemäß einem der Ansprüche 12 oder 15, bei dem der Schritt der Synchronisierung des weiteren den Schritt zur Bestimmung des Zustandes, daß kein Träger über eine vorbestimmte Anzahl an Datenintervallen T erfaßt wurde, aufweist, und in diesem Zustand, zur Anzeige, daß keine - Synchronisierung geschaffen wurde, wodurch eine temporäre Nichterfassung des Trägers aufgrund von Variationen der Übertragungscharakteristik des Übertragungsmediums und Nichterfassung des Trägers aufgrund der Beendigung der Kommunikation unterschieden werden.

17. Verfahren gemäß Anspruch 16, bei der der Schritt der Synchronisierung des weiteren folgenden Schritt umfaßt:
Anpassung der Periode des Datenintervalls T, wodurch die nachfolgend durch den Spitzenerfassungsschritt erfaßte Spitzenposition der Mitte des vorbestimmten Bereichs des Datenintervalls näherkommt.

18. Empfangsverfahren mit einer Tastung mit wechselnder Codierung zur Spreizspektrumkommunikation, wobei bei der Kommunikation eine von zwei Manchester-M-Serien mit einer vorbestimmten Periode und gleicher Code länge gemäß dem Binärzustand jedes Eingabedatenbits zur Übertragung erzeugt wird; wobei die Manchester-M-Serie, welche tatsächlich übertragen werden soll, einen absoluten Autokorrelationswert aufweist, dessen maximaler Wert immer größer als ein Kreuzkorrelationswert der zwei Manchester-M-Serien ist, und wobei die erzeugte Manchester-M-Serie über ein Übertragungsmedium übertragen wird, mit folgenden Schritten:

Empfangen der Manchester-M-Serien von dem Übertragungsmedium;

Bilden eines empfangenen Datenbits mit einem Binärzustand entsprechend dem Zustand des Eingabedatenbits, wonach die empfangene Manchester-M-Serie erzeugt wurde; und

wobei der Bildungsschritt folgende Schritte aufweist:

Korrelation jeder der empfangenen Manchester-M-Serien mit einem festen Muster einer der Manchester-M-Serien zur Bereitstellung eines ersten Korrelationsausgangssignals;

Korrelation jeder der empfangenen Manchester-M-Serien mit einem festen Muster der anderen der zwei Manchester-M-Serien, zur Bereitstellung eines zweiten Korrelationsausgangssignals;

Demodulieren des ersten und des zweiten Korrelationsausgangssignals zur Bildung eines entsprechenden empfangenen Datenbits;

Synchronisieren beider Korrelationsschritte mit einem Datenintervall T gleich einer Periode der Manchester-M-Serien, und

wobei der Synchronisierungsschritt folgende Schritte aufweist:

Erfassen der Spitze des absoluten Wertes der Summe des ersten und des zweiten Korrelationsausgangssignals;

Bestimmung, ob die erfaßte Spitze innerhalb eines vorbestimmten Bereichs des Datenintervalls T liegt; und

ansprechend auf eine negative Bestimmung durch den Bestimmungsschritt, Schaffung einer Synchronisierung zwischen dem ersten und dem zweiten Korrelationsausgangssignal und dem Datenintervall T.

19. Verfahren gemäß Anspruch 18, bei dem der Schritt der Bildung des weiteren folgenden Schritt aufweist:
Erfassung vom ersten und zweiten Korrelationsausgangssignal, ob ein Trägersignal empfangen ist.

20. Verfahren gemäß Anspruch 18, bei dem der Schritt der Synchronisierung folgenden Schritt umfaßt:

Bestimmung des Zustandes, daß kein Träger über eine vorbestimmte Anzahl an Datenintervallen T erfaßt wurde, und in diesem Zustand, zur Anzeige, daß keine Synchronisierung geschaffen wurde;

wodurch eine temporäre Nichterfassung des Trägers aufgrund von Variationen der Übertragungscharakteristik des Übertragungsmediums und Nichterfassung des Trägers aufgrund der Beendigung der Kommunikation unterschieden werden.

**21.** Verfahren gemäß einem der Ansprüche 18 und 20, bei dem der Schritt der Synchronisierung des weiteren folgenden Schritt umfaßt:

Anpassung der Periode des Datenintervalls, wodurch die nachfolgend durch den Spitzenerfassungsschritt erfaßte Spitzenposition der Mitte des vorbestimmten Bereichs des Datenintervalls T näherkommt.

**Revendications**

**1.** Dispositif de communication par déplacement de code pour une communication à spectre étalé, comprenant :

un modulateur à deux séries (11, 111) pour produire une série parmi deux séries M de Manchester avec une période prédéterminée en réponse à chaque bit de données d'entrée dans un flot de bits binaires de données de transmission, modulateur dans lequel l'une desdites deux séries M de Manchester est produite en réponse à un premier état binaire dudit bit de données d'entrée et l'autre desdites deux séries M de Manchester est produite en réponse à l'autre état binaire dudit bit de données d'entrée, lesdites deux séries M de Manchester ayant une longueur de code égale ;

dans lequel ladite série M de Manchester à transmettre réellement possède une valeur d'autocorrélation absolue dont la valeur maximale est toujours supérieure à une valeur d'intercorrélation desdites deux séries M de Manchester ;

dans lequel ledit modulateur à deux séries (11, 111) comprend :

des moyens (131) pour produire l'une desdites deux séries M de Manchester ;
des moyens (132) pour produire l'autre desdites deux séries M de Manchester ; et
des moyens (133) pour commuter de manière sélective l'une desdites séries M de Manchester produites en tant que sortie dudit modulateur à deux séries (11, 111), sur la base de l'état binaire dudit bit de données d'entrée ; ladite commutation étant synchrone avec la période desdites deux séries M de Manchester ;

des moyens (12, 112A) pour transmettre ladite série M de Manchester pour chaque bit de données d'entrée sur un support de transmission ;
des moyens d'interface de réception (13, 112B) pour recevoir les deux séries M de Manchester en provenance dudit support de transmission ; et

des moyens de formation (14, 114), sensibles à chaque dite série M de Manchester reçue par lesdits moyens d'interface de réception (13, 112B), pour former un bit de données reçu ; chaque bit de données reçu ayant un état binaire correspondant à l'état binaire du bit de données d'entrée selon lequel ladite série M de Manchester transmise sur ledit support de transmission a été produite par ledit modulateur à deux séries (11, 111) dans lequel lesdits moyens de formation (14, 114) sont constitués par un circuit de démodulation à deux séries, comprenant :

des premiers moyens de corrélation (121) pour corréler chaque dite série M de Manchester reçue à une combinaison fixe de l'une desdites deux séries M de Manchester qui a été fixée dans lesdits premiers moyens de corrélation et pour sortir un premier signal de sortie de corrélation ;
des seconds moyens de corrélation (122) pour corréler chaque dite série M de Manchester reçue à une combinaison fixe de l'autre desdites deux séries M de Manchester qui a été fixée dans lesdits seconds moyens de corrélation et pour sortir un second signal de sortie de corrélation ;
des moyens (123) pour démoduler lesdits premier et second signaux de sortie de corrélation pour former un dit bit de données reçu correspondant ; caractérisé par
des moyens de commande synchrones (125) sensibles auxdits premier et second signaux de sortie de corrélation pour synchroniser lesdits premier et second signaux de sortie de corrélation à un intervalle de données T égal à une période des séries M de Manchester.

**2.** Dispositif selon la revendication 1, dans lequel ledit circuit de démodulation à deux séries comprend de plus des moyens (124) pour la détection de porteuse pour déterminer si un signal de porteuse est reçu.

**3.** Dispositif selon la revendication 2, dans lequel lesdits moyens de commande synchrones (125) comprennent :

des moyens de détection pour détecter le pic de la valeur absolue de la somme desdits premier et second signaux de sortie de corrélation ;
des moyens de détermination pour déterminer si ledit pic détecté est à l'intérieur d'une partie prédéterminée dudit intervalle de données T ; et
des moyens sensibles à une détermination négative par lesdits moyens de détermination, pour établir une synchronisation entre lesdits premier et second signaux de sortie de corrélation et ledit intervalle de données T.

4. Dispositif selon la revendication 3, dans lequel lesdits moyens de commande synchrones (125) comprennent de plus des moyens pour déterminer la condition qu'aucune porteuse n'a été détectée pendant un nombre prédéterminé d'intervalles de données T, et lors de cette condition, pour indiquer que la synchronisation n'a pas été établie, de sorte que l'on peut faire une distinction entre une non-détection temporaire de la porteuse due à des variations des caractéristiques de transmission du support de transmission et la non-détection de la porteuse due à une fin de communication.

5. Dispositif selon la revendication 4, dans lequel lesdits moyens de commande synchrones (125) comprennent de plus des moyens de suivi synchrones pour ajuster la période de l'intervalle de données T de sorte que la position de pic détectée ensuite par lesdits moyens de détection se déplace plus près du centre de ladite position prédéterminée de l'intervalle de données T.

6. Dispositif de réception par déplacement de code, pour un système de communication, système de communication dans lequel l'une des deux séries M de Manchester ayant une période prédéterminée et ayant une longueur de code égale est produite par des moyens de production (11, 111) selon l'état binaire de chaque bit de données d'entrée pour une transmission et dans lequel ladite série M de Manchester produite est transmise sur un support de transmission, dans lequel ladite série M de Manchester à transmettre réellement possède une valeur d'autocorrélation absolue dont la valeur maximale est toujours supérieure à une valeur d'intercorrélation des deux séries M de Manchester, le dispositif de réception par déplacement de code comprenant :

des moyens d'interface de réception (13, 112B) pour recevoir ladite série M de Manchester en provenance dudit support de transmission ; et un circuit de démodulation à deux séries (14, 114) sensible à chacune desdites séries M de Manchester reçue en provenance desdits moyens d'interface de réception (13, 112B) pour former un bit de données reçu ; chaque dit bit de données reçu ayant un état binaire correspondant à l'état binaire du bit de données d'entrée selon lequel ladite série M de Manchester transmise sur ledit support de transmission a été produite par lesdits moyens de production ; ledit circuit de démodulation à deux séries (14, 114) comprenant :

des premiers moyens de corrélation (121) pour corréler chaque dite série M de Manchester reçue à une combinaison fixe de l'une desdites deux séries M de Manchester qui a été fixée dans lesdits premiers moyens de corrélation (121) et pour sortir un premier signal de sortie de corrélation ; des seconds moyens de corrélation (122) pour corréler chaque dite série M de Manchester reçue à une combinaison fixe de l'autre desdites deux séries M de Manchester qui a été fixée dans lesdits seconds moyens de corrélation (122) et pour sortir un second signal de sortie de corrélation ; et des moyens (123) pour démoduler lesdits premier et second signaux de sortie de corrélation pour former un dit bit de données reçu correspondant ; caractérisé par des moyens de commande synchrones (125) sensibles auxdits premier et second signaux de sortie de corrélation pour synchroniser lesdits premier et second signaux de sortie de corrélation à un intervalle de données T égal à une période des séries M de Manchester.

7. Dispositif selon la revendication 6, dans lequel ledit circuit de démodulation à deux séries comprend de plus des moyens (124) pour la détection de porteuse pour déterminer si un signal de porteuse est reçu.

8. Dispositif selon la revendication 6, dans lequel ledit circuit de démodulation à deux séries (14, 114) comprend, de plus :

des moyens (124) sensibles auxdits premier et second signaux de sortie de corrélation pour la détection de porteuse pour déterminer si un signal de porteuse est reçu.

9. Dispositif selon la revendication 8, dans lequel lesdits moyens de commande synchrones (125) comprennent :

des moyens de détection pour détecter le pic de la valeur absolue de la somme desdits premier et second signaux de sortie de corrélation ; des moyens de détermination pour déterminer si ledit pic détecté est à l'intérieur d'une partie prédéterminée dudit intervalle de données T ; et des moyens sensibles à une détermination négative par lesdits moyens de détermination, pour établir une synchronisation entre lesdits premier et second signaux de sortie de corrélation et ledit intervalle de données T.

**10.** Dispositif selon la revendication 9, dans lequel lesdits moyens de commande synchrones (125) comprennent de plus des moyens pour déterminer la condition en ce qu'aucune porteuse n'a été détectée pendant un nombre prédéterminé d'intervalles de données T, et lors de cette condition, pour indiquer que la synchronisation n'a pas été établie, de sorte que l'on peut faire une distinction entre une non-détection temporaire de la porteuse due à des variations des caractéristiques de transmission du support de transmission et la non-détection de la porteuse due à une fin de communication.

**11.** Dispositif selon la revendication 10, dans lequel lesdits moyens de commande synchrones (125) comprennent de plus des moyens de suivi synchrones pour ajuster la période de l'intervalle de données T de sorte que la position de pic détectée ensuite par lesdits moyens de détection de pic se déplace plus près du centre de ladite position prédéterminée de l'intervalle de données.

**12.** Procédé de déplacement de code pour une communication à spectre étalé, comprenant les étapes suivantes :

production d'une série parmi deux séries M de Manchester avec une période prédéterminée à l'aide d'un modulateur à deux séries en réponse à chaque bit de données d'entrée pour une transmission, selon l'état binaire dudit bit de données d'entrée ; l'une desdites deux séries M de Manchester correspondant à l'un desdits états binaires et l'autre desdites deux séries M de Manchester correspondant à l'autre desdits états binaires, lesdites deux séries M de Manchester ayant une longueur de code égale ; dans lequel ladite série M de Manchester à transmettre réellement possède une valeur d'autocorrélation absolue dont la valeur maximale est toujours supérieure à une valeur d'intercorrélation desdites deux séries M de Manchester ; et transmission de ladite série M de Manchester produite sur un support de transmission ; réception de ladite série M de Manchester en provenance dudit support de transmission ; formation d'un bit de données reçu ayant un état binaire correspondant à celui du bit de données d'entrée selon lequel ladite série M de Manchester a été produite ;

dans lequel ladite étape de formation comprend les étapes suivantes :

corrélation de chaque dite série M de Manchester reçue à une combinaison fixe de l'une desdites séries M de Manchester pour donner un premier signal de sortie de corrélation ; corrélation de chaque dite série M de Manchester reçue à une combinaison fixe de l'autre desdites séries M de Manchester pour donner un second signal de sortie de corrélation ; démodulation desdits premier et second signaux de sortie de corrélation pour former un dit bit de données reçu correspondant ;

synchronisation desdites deux étapes de corrélation à un intervalle de données T égal à une période de la série M de Manchester et dans lequel ladite étape de synchronisation comprend les étapes suivantes :

détection du pic de la valeur absolue de la somme desdits premier et second signaux de sortie de corrélation ; détermination de savoir si ledit pic détecté est à l'intérieur d'une partie prédéterminée dudit intervalle de données T ; et en réponse à une détermination négative donnée par ladite étape de détermination, établissement d'une synchronisation entre lesdits premier et second signaux de sortie de corrélation et ledit intervalle de données T.

**13.** Procédé selon la revendication 12, dans lequel ladite étape de transmission comprend une étape pour transformer ladite série de codes produite en une forme correspondant audit support de transmission pour une transmission sur ce dernier.

**14.** Procédé selon la revendication 13, dans lequel ladite étape de production comprend les étapes suivantes :

production de l'une desdites deux séries M de Manchester ; production de l'autre desdites deux séries M de Manchester ; et commutation sélective de l'une desdites séries M de Manchester produites en tant que sortie de ladite étape de production, selon l'état binaire d'un dit bit de données correspondant pour la transmission ; ladite commutation étant synchrone avec la période desdites deux séries M de Manchester.

**15.** Procédé selon la revendication 12, dans lequel ladite étape de formation comprend de plus l'étape suivante : détection à partir desdits premier et second signaux de sortie de corrélation de savoir si un signal de porteuse est reçu.

**16.** Procédé selon l'une des revendications 12 ou 15, dans lequel ladite étape de synchronisation comprend de plus l'étape de détermination de la condition en ce qu'aucune porteuse n'a été détectée pendant un nombre prédéterminé d'intervalles de données T, et lors de cette condition, d'indication que la synchronisation n'a pas été établie, de sorte que l'on peut faire une distinction entre une non-détection temporaire de la porteuse due à des variations des caractéristiques de transmission du support de transmission et la non-détection de la porteuse due à une fin de communication.

17. Procédé selon la revendication 16, dans lequel ladite étape de synchronisation comprend de plus l'étape suivante :

ajustement de la période dudit intervalle de données T de sorte que la position de pic détectée ensuite par lesdits moyens de détection de pic se déplace plus près du centre de ladite partie prédéterminée de l'intervalle de données.

18. Procédé de réception par déplacement de code pour une communication à spectre étalé, communication dans laquelle l'une des deux séries M de Manchester ayant une période prédéterminée et une longueur de code égale est produite selon l'état binaire de chaque bit de données d'entrée pour la transmission ; dans lequel ladite série M de Manchester à transmettre réellement possède une valeur d'autocorrélation absolue dont la valeur maximale est toujours supérieure à une valeur d'intercorrélation des deux séries M de Manchester ; et dans lequel ladite série M de Manchester produite est transmise sur un support de transmission ; comprenant les étapes suivantes :

réception de ladite série M de Manchester en provenance dudit support de transmission ; formation d'un bit de données reçu ayant un état binaire correspondant à l'état du bit de données d'entrée selon lequel ladite série M de Manchester a été produite ; et

dans lequel ladite étape de formation comprend les étapes suivantes :

corrélation de chaque dite série M de Manchester reçue à une combinaison fixe de l'une desdites séries M de Manchester pour donner un premier signal de sortie de corrélation ; corrélation de chaque dite série M de Manchester reçue à une combinaison fixe de l'autre desdites deux séries M de Manchester pour donner un second signal de sortie de corrélation ; démodulation desdits premier et second signaux de sortie de corrélation pour former un dit bit de données reçu correspondant ; synchronisation desdites deux étapes de corrélation à un intervalle de données T égal à une période de la série M de Manchester ; et

dans lequel ladite étape de synchronisation comprend les étapes suivantes :

détection du pic de la valeur absolue de la somme desdits premier et second signaux de sortie de corrélation ; détermination de savoir si ledit pic détecté est à l'intérieur d'une partie prédéterminée dudit intervalle de données T ; et en réponse à une détermination négative donnée par ladite étape de détermination, établissement d'une synchronisation entre lesdits premier et second signaux de sortie de corrélation et ledit intervalle de données T.

19. Procédé selon la revendication 18, dans lequel ladite étape de formation comprend de plus l'étape suivante :

détection à partir desdits premier et second signaux de sortie de corrélation de savoir si un signal de porteuse est reçu.

20. Procédé selon la revendication 18, dans lequel ladite étape de synchronisation comprend l'étape suivante :

détermination de la condition en ce qu'aucune porteuse n'a été détectée pendant un nombre prédéterminé d'intervalles de données T, et lors de cette condition, pour indiquer que la synchronisation n'a pas été établie ; de sorte que l'on peut faire une distinction entre une non-détection temporaire de la porteuse due à des variations des caractéristiques de transmission du support de transmission et la non-détection de la porteuse due à une fin de communication.

21. Procédé selon l'une des revendications 18 et 20, dans lequel ladite étape de synchronisation comprend de plus l'étape suivante :

ajustement de la période dudit intervalle de données de sorte que la position de pic détectée ensuite par lesdits moyens de détection de pic se déplace plus près du centre de ladite partie prédéterminée de l'intervalle de données T.

FIG. 1 PRIOR ART

FIG. 2 PRIOR ART

FIG. 3A

SYNCHRONOUS POINT

FIG. 3B

SYNCHRONOUS POINT

FIG. 3C

SYNCHRONOUS POINT

FIG. 4

## FIG. 5

TRANSMITTING DATA (TXD)

111

131 MANCHESTER M SERIES GENERATOR

132 MANCHESTER M SERIES GENERATOR

133

TRANSMITTING SIGNAL (TXO)

112A TRANSMITTING INTERFACE

MODULATION APPARATUS (CSK MODULATOR)

TRANSMITTING PATH

114

RECEIVED DATA (RXD)

123 DEMODULATOR

121 CORRELATOR

124 CARRIER DETECTING CKT

122 CORRELATOR

CONTROL SIGNAL

RECEIVED SIGNAL (RXI)

112B RECEIVING INTERFACE

CARRIER DETECTION

125 SYNCHRONOUS CONTROL CKT

EP 0 366 086 B1

29

FIG. 6

FIG. 7

CK FF₁₁ FF₁₂ FF₁₃ LD FF₂₁ FF₂₂ FF₂₃ PN1 PN2 TXD MDout TRANSMITTING SIGNAL TXO

T T T

EP 0 366 086 B1

# FIG. 8

111

EP 0 366 086 B1

# FIG. 9

111″

TRANSMITTING DATA TXD

TRANSMITTING SIGNAL TXO

EP 0 366 086 B1

FIG. 10

EP 0 366 086 B1

# FIG. 11

# FIG. 12

## FIG. 13

## FIG. 14

# FIG. 15

51 REGISTER

52 SHIFT REGISTER ( n = N x m )

| PN1-1 | PN1-2 | | PN1-n |

| SF$_m$ | SF$_{m-1}$ | | SF$_2$ | SF$_1$ |

RECEIVED SIGNAL

50(1)

m

53
(n = N x m)

Σ ——54

d$_1$

50(2)

d$_2$

## FIG. 16

611(N BIT)

610(Nxm)

(PN1 MEMORY) REGISTER

SHIFT REGISTER

612

613

$d_1$

621

(PN2 MEMORY)REGISTER

622

623

$d_2$

EP 0 366 086 B1

38

# FIG. 17

EP 0 366 086 B1

FIG. 18

71A SHIFT REGISTER

71D UP/DOWN COUNTER

CO(d₁ OR d₂)

FIG. 19

| Di | M | DO | CK1 | $\overline{R}$ | a | b | CO |
|----|---|----|-----|----|---|---|-----|
| 0 | 0 | 0 | — | 0 | 0 | 0 | 0 |
| 0 | 0 | 0 | ╱ | 1 | 0 | 0 | NC |
| 0 | 0 | 1 | ╱ | 1 | 0 | 1 | +1 |
| 0 | 1 | 0 | ╱ | 1 | 1 | 0 | NC |
| 0 | 1 | 1 | ╱ | 1 | 1 | 1 | −1 |
| 1 | 0 | 0 | ╱ | 1 | 1 | 1 | −1 |
| 1 | 0 | 1 | ╱ | 1 | 1 | 0 | NC |
| 1 | 1 | 0 | ╱ | 1 | 0 | 1 | +1 |
| 1 | 1 | 1 | ╱ | 1 | 0 | 0 | NC |

+1···CO VALUE INCREASES BY 1

−1···CO VALUE DECREASES BY 1

NC···CO VALUE IS UNCHANGED

FIG. 20

# FIG. 21

# FIG. 22

FIG. 23

241A

121

243A

244A

Σ → Ra

242A

RECEIVED
SIGNAL RXI

CKm

EP 0 366 086 B1

FIG. 24

EP 0 366 086 B1

## FIG. 25

EP 0 366 086 B1

## FIG. 26

## FIG. 27

FIG. 28

FIG. 29

CURRENT CORRELATION VALUE Ra

CURRENT CORRELATION VALUE Rb

DATA INTERVAL END SIGNAL ED

WINDOW START PULSE WL

WINDOW STOP PULSE WH

WINDOW SIGNAL WS

DEMODULATED DATA RXD
(RECEIVING DATA)

EP 0 366 086 B1

## FIG. 30

EP 0 366 086 B1

# FIG. 31

CURRENT CORRELATION OUTPUT Ra

P1

OURRENT CORRELATION OUTPUT Rb

P2

OUTPUT OF ADDER 261

P3

OUTPUT OF LATCH CIRCUIT 263

OUTPUT OF COMPARATOR 262

DATA INTERVAL END SIGNAL ED

INPUT RESET OF COUNTER 266

PP

PEAK POSITION

DATA INTERVAL T

PART W

WINDOW START
POSITION

WINDOW STOP
POSITION

FIG. 32

WINDOW SIGNAL WS

ADDED CORRELATION OUTPUT

DATA INTERVAL END SIGNAL ED

PEAK POSITION DETERMINING SIGNAL PH

IDENTIFIED SIGNAL OF COMPARATOR 283

X TIMES

INPUT RESET OF COUNTER 282

SYNCHRONIZATION ESTABLISHMENT
SIGNAL DSR

POWER ON

EP 0 366 086 B1

## FIG. 33

CURRENT CORRELATION OUTPUT Ra

CURRENT CORRELATION OUTPUT Rb

CARRIER DETECTION SIGNAL PAS

CE INPUT OF COUNTER 292

RESET INPUT OF COUNTER 292

Y TIMES

IDENTIFIED SIGNAL OF COMPARATOR 293

SYNCHRONIZATION ESTABLISHMENT SIGNAL DSR

DATA INTERVAL END SIGNAL ED

FIG. 34

# FIG. 35

# FIG. 36